(19) **Europäisches Patentamt / European Patent Office / Office européen des brevets**

(11) **EP 4 588 769 A1**

(12) **EUROPEAN PATENT APPLICATION**
published in accordance with Art. 153(4) EPC

(43) Date of publication:
**23.07.2025 Bulletin 2025/30**

(21) Application number: **23865558.3**

(22) Date of filing: **13.09.2023**

(51) International Patent Classification (IPC):
**B62K 15/00** $^{(2006.01)}$ **B62J 50/22** $^{(2020.01)}$
**B62M 6/40** $^{(2010.01)}$

(52) Cooperative Patent Classification (CPC):
**B62J 50/22; B62K 15/00; B62M 6/40**

(86) International application number:
**PCT/JP2023/033349**

(87) International publication number:
**WO 2024/058209 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022 JP 2022146575**

(71) Applicant: **HONDA MOTOR CO., LTD.
Tokyo 105-8404 (JP)**

(72) Inventors:
• **SUNAMOTO, Masayuki**
**Tokyo 107-8556 (JP)**
• **NOMURA, Naoki**
**Tokyo 107-8556 (JP)**
• **ONUKI, Hirotaka**
**Tokyo 107-8556 (JP)**
• **HATTORI, Makoto**
**Tokyo 107-8556 (JP)**

(74) Representative: **Weickmann & Weickmann
PartmbB
Postfach 860 820
81635 München (DE)**

(54) **VEHICLE MANAGEMENT METHOD, VEHICLE MANAGEMENT PROGRAM, STORAGE MEDIUM, AND INFORMATION PROCESSING DEVICE**

(57) A management method for an electric bicycle (10) having a vehicle body frame (67) and a motor (M) includes a step of acquiring, as first identification information and second identification information, any two of a vehicle body number, a power unit number, communication address information of a control circuit (40), a battery number, a vehicle ID, and owing entities identification information for identifying an entity of owing the electric bicycle (10) or others, and a step of associating the first identification information which is acquired and the second identification information which is acquired.

FIG. 8

```
START
LOG INTO STORE APPLICATION
(ACQUIRE STORE ID)          —— S100
ACQUIRE COMMUNICATION
ADDRESS INFORMATION         —— S110
OF CONTROL CIRCUIT
ACQUIRE VEHICLE
MODEL INFORMATION           —— S120
ACQUIRE VEHICLE
BODY NUMBER                 —— S130
ACQUIRE VEHICLE ID          —— S140
ACQUIRE POWER UNIT NUMBER   —— S150
ACQUIRE BATTERY NUMBER      —— S160
ATTACHMENT CHECK            —— S170
OPERATION CONFIRMATION      —— S180
DELIVER TO USER             —— S190
END
```

**Description**

TECHNICAL FIELD

The present invention relates to a vehicle management method, a vehicle management program, a storage medium, and an information processing device.

BACKGROUND ART

An electric assist bicycle has been known which assists a stepping force of a crank pedal with power of a motor (for example, Patent Literature 1 and Patent Literature 2). The electric assist bicycle includes a bicycle in which an electric assist unit is retrofitted to an existing vehicle body frame, as in Patent Literature 2, for example, unlike a completed bicycle in which an electric assist unit is pre-installed.

CITATION LIST

PATENT LITERATURE

Patent Literature 1: JPH11-005583A
Patent Literature 2: JP2001-039377A

SUMMARY OF INVENTION

TECHNICAL PROBLEM

In an electric assist bicycle to which an electric assist unit is retrofitted, various electric components such as a control circuit, a motor, and a battery are mounted on a vehicle body frame. Depending on combination of the components, the electric assist bicycle may be illegal, and thus it is desirable to appropriately manage information on the components mounted on the electric assist bicycle. In addition to appropriately managing component information of the electric assist bicycle, it is desirable to appropriately manage information such as an entity of owing the electric assist bicycle.
The present invention provides a vehicle management method, a vehicle management program, a storage medium, and an information processing device capable of appropriately managing information on components constituting a vehicle, information on an entity of owning the vehicle or others.

SOLUTION TO PROBLEM

The present invention provides a vehicle management method for managing a vehicle having a vehicle body and a power source mounted on the vehicle body, the vehicle management method including:

a step of acquiring, as first identification information and second identification information, any two of

vehicle body identification information which is identification information for identifying the vehicle body,
power source identification information which is identification information for identifying the power source,
control device identification information which is identification information for identifying a control device configured to control at least one of the vehicle and the power source,
energy storage device identification information which is identification information for identifying an energy storage device configured to store energy to be supplied to the power source,
vehicle identification information which is identification information for identifying the vehicle, and
owing entities identification information which is identification information for identifying an entity of owning or others that is any one of an entity of owing the vehicle, an entity of managing the vehicle, or an entity of using the vehicle; and

a step of associating the first identification information which is acquired and the second identification information which is acquired.

The present invention provides a vehicle management program for managing a vehicle having a vehicle body and a power source mounted on the vehicle body, the vehicle management program causing a computer to execute:

a step of acquiring, as first identification information and second identification information, any two of

vehicle body identification information which is identification information for identifying the vehicle body,
power source identification information which is identification information for identifying the power source,
control device identification information which is identification information for identifying a control device configured to control at least one of the vehicle and the power source,
energy storage device identification information which is identification information for identifying an energy storage device configured to store energy to be supplied to the power source,
vehicle identification information which is identification information for identifying the vehicle, and
owing entities identification information which is identification information for identifying an entity of owning or others that is any one of an entity of owing the vehicle, an entity of managing the vehicle, or an entity of using the vehicle; and

a step of associating the first identification information which is acquired and the second identification information which is acquired.

The present invention provides a computer-readable storage medium storing the management program.

The present invention provides an information processing device that manages a vehicle having a vehicle body and a power source mounted on the vehicle body, the information processing device including:

an acquisition unit configured to acquire, as first identification information and second identification information, any two of

vehicle body identification information which is identification information for identifying the vehicle body,
power source identification information which is identification information for identifying the power source,
control device identification information which is identification information for identifying a control device configured to control at least one of the vehicle and the power source,
energy storage device identification information which is identification information for identifying an energy storage device configured to store energy to be supplied to the power source,
vehicle identification information which is identification information for identifying the vehicle, and
owing entities identification information which is identification information for identifying an entity of owning or others that is any one of an entity of owing the vehicle, an entity of managing the vehicle, or an entity of using the vehicle; and

a processing unit configured to associate the first identification information and the second identification information which are acquired by the acquisition unit with each other.

ADVANTAGEOUS EFFECTS OF INVENTION

According to the present invention, it is possible to appropriately manage information on components constituting a vehicle, information on an entity of owning the vehicle or others.

BRIEF DESCRIPTION OF DRAWINGS

[FIG. 1] FIG. 1 is a diagram illustrating a correlation between parties involved in an electric bicycle management method according to an embodiment of the present invention.
[FIG. 2] FIG. 2 is a graph illustrating a relationship between an assist ratio and a vehicle speed of an electric assist bicycle.
[FIG. 3] FIG. 3 is a side view of an electric bicycle 10.
[FIG. 4] FIG. 4 is a schematic diagram of a power transmission mechanism T including a power unit 20.
[FIG. 4B] FIG. 4B is a schematic diagram of a power transmission mechanism T including a power unit 20 in which a switching transmission device 30 is provided between a driven sprocket 81 and a rear wheel 78.
[FIG. 5] FIG. 5 is a diagram illustrating electric paths and communication paths of the power unit 20, a battery 2, and a control circuit 40 in the electric bicycle 10.

[FIG. 6] FIG. 6 is a control map in which a target current for a vehicle speed and a target torque is set.

[FIG. 7] FIG. 7 is a diagram illustrating a relationship between a user, a sales store, and a server.

[FIG. 8] FIG. 8 is a flowchart of the electric bicycle management method according to the embodiment of the present invention.

[FIG. 9] FIG. 9 is a diagram illustrating an example of a flow at the time of attaching an assist device.

[FIG. 10] FIG. 10 is a screen for selecting communication address information of the control circuit 40 in a store application.

[FIG. 11] FIG. 11 is a screen for selecting a vehicle model in the store application.

[FIG. 12] FIG. 12 is a screen for confirming vehicle information and acquiring a vehicle body number in the store application.

[FIG. 13] FIG. 13 is a screen showing that a vehicle ID is given in the store application.

[FIG. 14] FIG. 14 is a screen for acquiring a power unit number and a battery number in the store application.

[FIG. 15] FIG. 15 is a screen showing vehicle information associated with the vehicle ID in the store application.

[FIG. 16] FIG. 16 is an attachment check screen displayed when an attachment check is performed in the store application.

[FIG. 17] FIG. 17 is an operation confirmation screen displayed when operation confirmation is performed in the store application.

[FIG. 18] FIG. 18 is a screen for acquiring user information on a user as a delivery destination in the store application.

[FIG. 19] FIG. 19 is a delivery content confirmation screen for confirming the user information on the user as the delivery destination and vehicle information on a delivered vehicle in the store application.

[FIG. 20] FIG. 20 is a screen in the store application showing that an owing entity of the vehicle has been changed from a sales store X to the user on the store application.

[FIG. 21] FIG. 21 is an owned vehicle list screen displaying a list of vehicles owned by the sales store X in the store application.

[FIG. 22] FIG. 22 is a screen displayed after a vehicle is selected from the owned vehicle list screen in FIG. 21 in the store application.

[FIG. 23] FIG. 23 is a screen for displaying user information on a user who is an owing entity of the vehicle in the store application.

[FIG. 24] FIG. 24 is a screen for performing a vehicle pick-up procedure in the store application.

[FIG. 25] FIG. 25 is a store menu screen in the store application.

[FIG. 26] FIG. 26 is a functional block diagram of a store tablet 60 and a server 90, which are an example of an information processing device of the present invention.

DESCRIPTION OF EMBODIMENTS

Hereinafter, an embodiment of a vehicle management method, a vehicle management program, a storage medium storing the management program, and an information processing device according to the present invention will be described with reference to the drawings, taking an electric bicycle as an example of a vehicle.

[Correlation Between Parties]

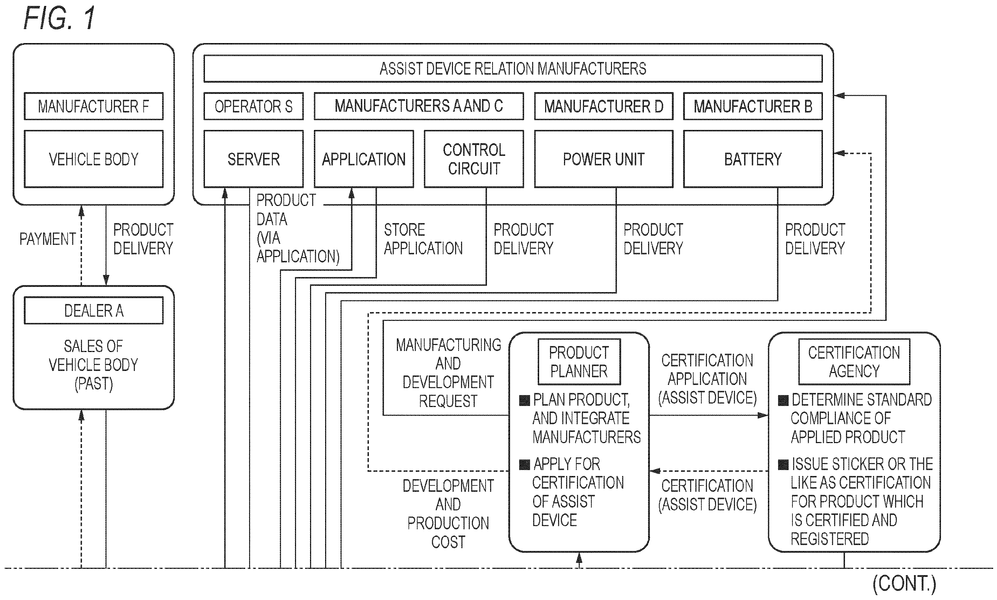

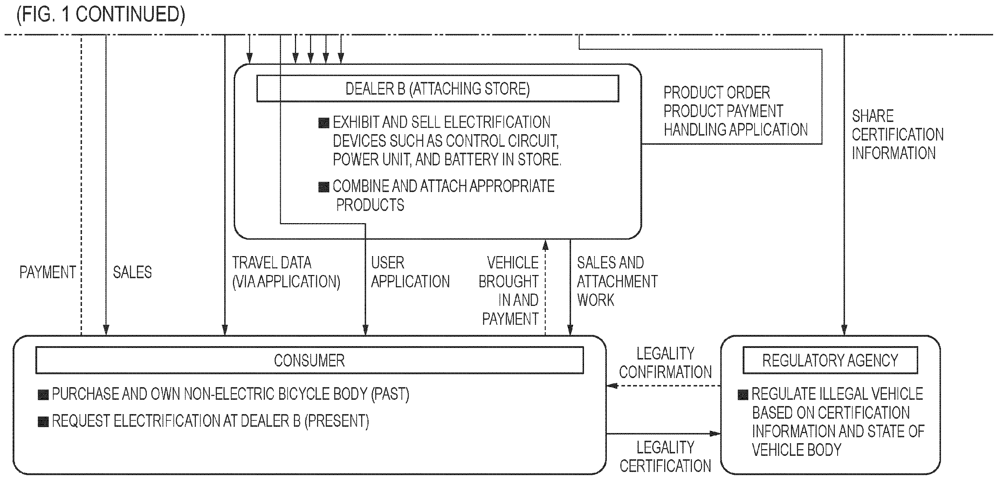

First, a description will be given of a correlation between parties involved in an electric bicycle management method. FIG. 1 is a party correlation diagram in which parties involved in the electric bicycle management method are summarized.

The parties involved in the electric bicycle management method include a plurality of manufacturers A, C, D, and B which manufacture components of an assist device and the like, an operator S which operates a server, a manufacturer F which manufactures a vehicle body of a non-electric bicycle to which an assist device (a power unit, a control circuit, and a battery) is to be attached, a dealer A which sells the vehicle body of the non-electric bicycle, a consumer (hereinafter, also referred to as a user) which purchases the non-electric bicycle from the dealer A, a dealer B which attaches the assist device to the non-electric bicycle in response to a request from the consumer, a product planner which performs product planning of the assist device and integrates the manufacturers A, C, D, and B and the operator S, a certification agency that determines standards compliance of the assist device or the electric bicycle to which the assist device is attached, and a regulatory agency that regulates an illegal vehicle. The correlation of the parties is an example, and another party may be involved, and at least a part of the plurality of manufacturers A, C, D, and B and the operator S (hereinafter, may be referred to as a manufacturer or the like) may be integrated. The manufacturer, the consumer, and the product planner may be a natural person or a corporation, or may be an association, a financial group, a private organization, or the like without a juridical personality. In the following description, it is assumed that the certification agency determines the standards compliance of an electric bicycle to which an assist device is attached. Hereinafter, an electric bicycle corresponding to a combination certified and registered by the certification agency may be referred to as a certified vehicle.

The manufacturer F delivers a vehicle body of a non-electric bicycle to the dealer A and receives a payment. The dealer A sells the vehicle body of the non-electric bicycle to a consumer and receives a payment.

The consumer (also referred to as a user) is a person who purchases a non-electric bicycle (a non-electric bicycle body) from the dealer A and owns the non-electric bicycle, and is a person who wants electrification of the non-electric bicycle. The consumer brings the vehicle body of the non-electric bicycle to the dealer B and requests electrification of the non-electric bicycle brought to the dealer B. The consumer makes a payment to the dealer B.

The product planner requests the manufacturers A, C, D, and B and the operator S to manufacture and develop various devices, and pays development and production costs.

The operator S develops, manufactures, and owns a server. The server collects and stores information on the electric bicycle, and performs necessary processing and the like on the information on the electric bicycle. The server communicates with a control circuit of the electric bicycle or a portable terminal of a consumer via a user application to exchange travel data and the like, and communicates with a computer (for example, a tablet terminal with a camera) of the dealer B via a store application to exchange vehicle data and the like. The server may be a distributed server including a plurality of server devices or a distributed virtual server (a cloud server) created in a cloud environment.

The manufacturer A develops an application (application software) for easily managing the electric bicycle, provides a user application to the consumer, and provides a store application to the dealer B.

The manufacturer C develops and manufactures a control circuit holding a control program, and delivers the control circuit to the dealer B. The manufacturer D develops and manufactures a power unit (a power unit in FIG. 1) and delivers the power unit to the dealer B. The control circuit and the power unit may be delivered to the dealer B after being integrated by the manufacturer C, the manufacturer D, or the like before being delivered to the dealer B, or may be delivered to the dealer B separately and then integrated by the dealer B, or may be delivered to the dealer B separately and then attached separately.

The manufacturer B develops and manufactures a battery and delivers the battery to the dealer B.

The dealer B exhibits and sells an assist device (an electrification device in the drawing) in a store, and performs attachment work by appropriately assembling the assist device to a non-electric bicycle brought in. The dealer B attaches the assist device to the non-electric bicycle, and then sells the electric bicycle to a consumer.

The product planner requests the manufacturers A, C, D, and B and the operator S to manufacture and develop various devices, and applies for a certification of the electric bicycle to the certification agency. It is preferable that the product planner applies for certifications of all combinations of the non-electric bicycle, the power unit, the control circuit, and the battery assumed in advance. For example, when there are ten combinations thereof, applications for ten types of electric bicycles are made. The certification agency determines the standards compliance of the electric bicycle for which an application is made, and issues a sticker or the like as a certification for a product which is certified and registered. The certification agency shares certification information with the regulatory agency.

The regulatory agency is, for example, the police, and regulates an illegal vehicle based on the certification information provided from the certification agency and a state of the electric bicycle.

It is needless to say that the electric bicycle retrofitted with the assist device complies with regulations at the time of being sold from the dealer B to the consumer, and thereafter, an electric bicycle management method is important in order to maintain the electric bicycle in a complying state complying with the regulations.

[Regulations]

Here, the regulations imposed on the electric bicycle in Japan will be described.

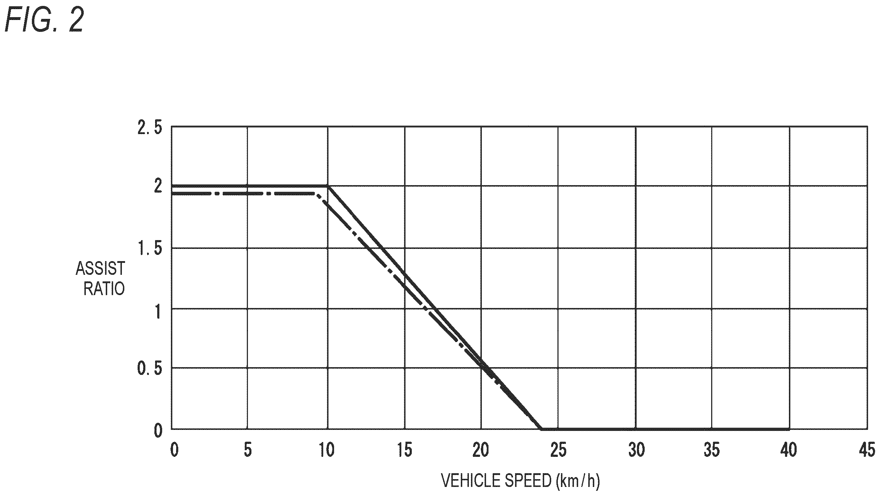

According to the regulations of Japan, as indicated by a solid line in FIG. 2, an upper limit value of an assist ratio is 2 until a vehicle speed reaches 10 km/h, and the assist ratio needs to be gradually decreased from 2 to 0 when the vehicle speed changes from 10 km/h to 24 km/h. Therefore, for example, as illustrated in FIG. 2, the control circuit manufactured by the manufacturer C is programmed to obtain an assist ratio indicated by a one-dot chain line which does not go beyond the regulation (the solid line) of Japan. The example indicated by the one-dot chain line in FIG. 2 is set such that a predetermined allowance (a margin) with respect to the upper limit of the assist ratio is secured in a range of less than 10 km/h and a range of 10 km/h to 24 km/h.

[Vehicle Structure]

Subsequently, an electric bicycle is exemplified as an embodiment of the vehicle of the present invention.

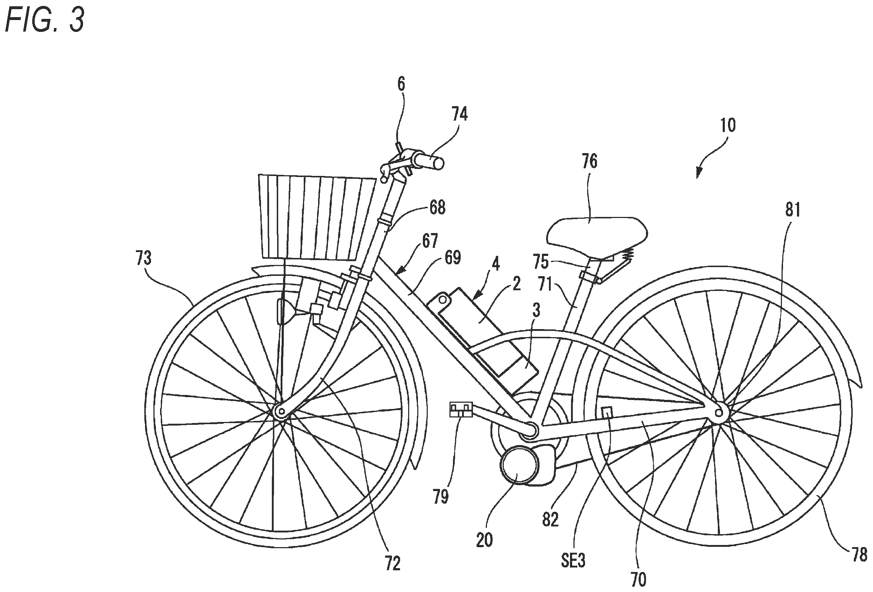

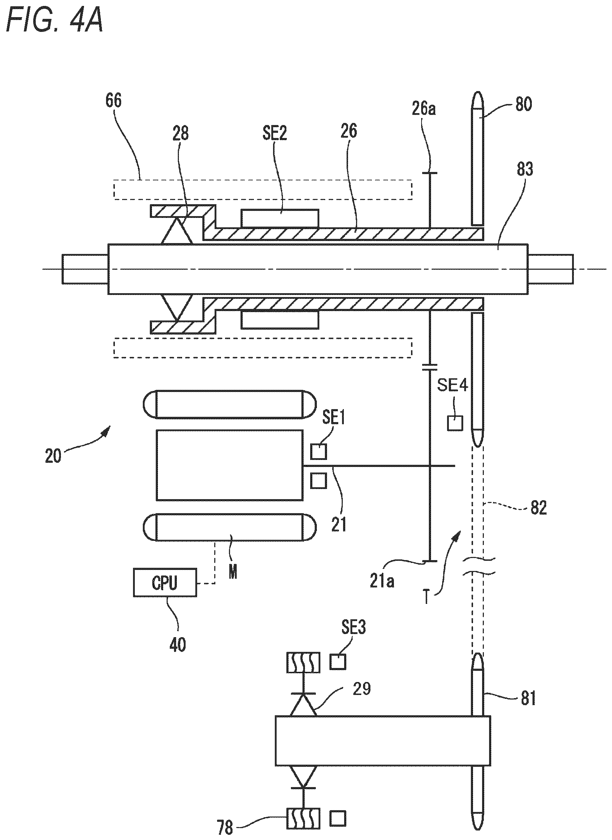

As illustrated in FIGS. 3 and 4A, an electric bicycle 10 is an electric assist bicycle which includes a front wheel 73, a rear wheel 78, a vehicle body frame 67, a power unit 20 driving the rear wheel 78, and a battery unit 4 electrically connected to the power unit 20, and which is capable of outputting an assist force generated by the power unit 20.

The vehicle body frame 67 includes a head pipe 68 at a front end, a down pipe 69 going down toward a rear side from the head pipe 68 and extending from a front portion to a rear portion of a vehicle body, a support pipe 66 (see FIG. 4A) fixed to a rear end of the down pipe 69 and extending in a left-right direction, a seat post 71 rising upward from the support pipe 66, and a pair of left and right rear forks 70 extending rearward from the support pipe 66.

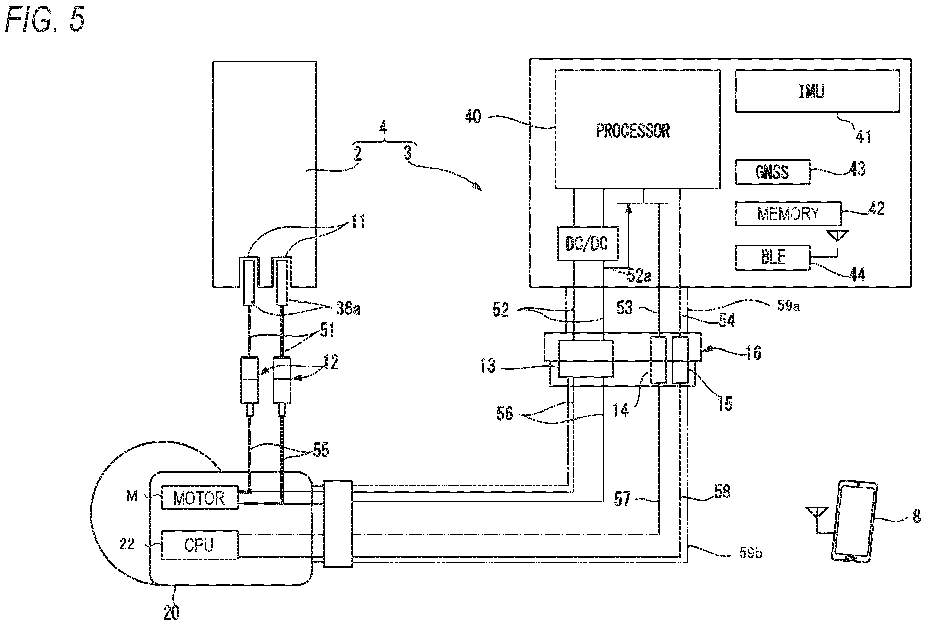

Front forks 72 are supported by the head pipe 68 so as to be steerable, and the front wheel 73 is pivotally supported by lower ends of the front forks 72. A steering handlebar 74 is provided at an upper end of the front forks 72. The steering handlebar 74 is provided with a portable terminal holder 6 for holding a portable terminal 8 (see FIG. 5) owned by an occupant (for example, a driver, also referred to as a user). The portable terminal 8 is, for example, a smartphone. It should be noted that the portable terminal holder 6 is not necessarily required, and the portable terminal 8 may be carried by an occupant, that is, the portable terminal 8 may be attached to (stored by) the occupant himself/herself or a wearing article (clothes and bags) of the occupant. The rear wheel 78 as a drive wheel is pivotally supported between rear ends of the pair of left and right rear forks 70 extending rearward from the seat post 71. A support shaft 75 including a seat 76 at an upper end thereof is attached to the seat post 71 such that a position of the seat 76 in an up-down direction can be adjusted.

The battery unit 4 which supplies electric power to the power unit 20 is detachably fixed to the down pipe 69. More specifically, the battery unit 4 includes a base 3 attached to an upper surface of the down pipe 69, and a battery 2 detachably attached to the base 3 and having a plurality of cells therein to accumulate energy (electric power).

FIG. 5 is a diagram illustrating electric paths and communication paths of the power unit 20, the battery 2, and the control circuit 40 in the electric bicycle 10.

In the base 3, the control circuit 40 (PROCESSOR in FIG. 5), a converter DC/DC, an inertial measurement unit (also referred to as IMU) 41, a global navigation satellite system (GNSS) unit 43, a memory 42, and a Bluetooth low energy (BLE) unit 44 are arranged.

The control circuit 40 includes, for example, a central processing unit (CPU) capable of executing various calculations, a random access memory (RAM) used as a work area of the CPU, and a storage medium such as a read only memory (ROM) storing various kinds of information. The control circuit 40 calculates a torque (also simply referred to as power) to be generated by a motor M of the power unit 20 so that an assist force determined by a pedal stepping force described later and an assist ratio corresponding to a vehicle speed of the electric bicycle 10 is generated. Accordingly, the motor M operates in accordance with a CPU 22 of the power unit 20 which receives a calculation result (a drive request) from the control circuit 40. Here, the control circuit 40 only needs to calculate at least a "command value or request value correlated with the power to be generated from the motor M", and may calculate an output limit value of the motor M or an output limit value of the battery 2, or perform calculations for controlling based on the output limit value. The "power" may be an output in addition to the torque or may be a current command or a current request.

The converter DC/DC steps down a supplied DC voltage as in the form of DC to generate a power supply voltage for the control circuit 40, the inertial measurement unit 41, the memory 42, the GNSS unit 43, and the BLE unit 44. In FIG. 5, a power supply line connecting the converter DC/DC to the inertial measurement unit 41, the GNSS unit 43, the memory 42, and the BLE unit 44 is omitted.

The inertial measurement unit 41 is, for example, a 9-axis sensor having functions of a 3-axis acceleration sensor, a 3-axis angular velocity sensor, and a 3-axis azimuth sensor, and detects a mounting posture of the control circuit 40. The GNSS unit 43 acquires position information of the electric bicycle 10. The memory 42 is, for example, an SD card, and temporarily or permanently holds information, travel data, and the like of the electric bicycle 10. The BLE unit 44 is a communication device for performing BT connection (Bluetooth communication) with the portable terminal 8, the store tablet 60, or the like.

The base 3 includes a male terminal 36a (a plug) electrically connected to a female terminal (a receptacle) 11 provided in the battery 2, a bullet pair 12 connected to the male terminal 36a via a power line 51, an electrical connector pair 13 electrically connected to the control circuit 40 via a power line 52 and the converter DC/DC, a communication connector pair 14 electrically connected to the control circuit 40 via a communication line 53, and a communication connector pair 15 communicably connected to the control circuit 40 via a communication line 54.

The bullet pair 12 is detachably connected to the battery 2 via the power line 51 and the male terminal 36a, and is also connected to the power unit 20 via a power line 55. The electrical connector pair 13 is connected to the converter DC/DC via the power line 52, and is also connected to the power unit 20 via a power line 56. The power line 56 is configured to be supplied with electric power from the battery 2 through a branch from the power line 55 or the like. The communication connector pair 14 is connected to the control circuit 40 via the communication line 53, and is also connected to the power unit 20 via a communication line 57. The communication connector pair 15 is connected to the control circuit 40 via the communication line 54, and is also connected to the power unit 20 via a communication line 58. The communication method via the communication lines 54 and 58 is not particularly limited, but is, for example, universal asynchronous receiver transmitter (UART) communication.

The electrical connector pair 13, the communication connector pair 14, and the communication connector pair 15 constitute the same connector pair 16. The power line 52, the communication line 53, and the communication line 54 constitute a first harness 59a, and the power line 56, the communication line 57, and the communication line 58 constitute a second harness 59b. In this way, since the connector pairs are integrated by the connector pair 16, and the power lines and the communication lines are bundled and integrally routed, assembly work can be facilitated.

In an electric system and a communication system configured as described above, electric power from the battery 2 is supplied to the motor M of the power unit 20, and electric power supplied from the power unit 20 and stepped down by the converter DC/DC is supplied to the control circuit 40, the inertial measurement unit 41, the GNSS unit 43, the memory, and the BLE unit 44. The control circuit 40 receives electric power before being stepped down by the converter DC/DC via a power branch line 52a, and outputs a power switch signal to the power unit 20 via the communication lines 53 and 57. In a state where electric power is supplied to the control circuit 40, when an activation request for the power unit 20 from the user is made via the user application of the portable terminal 8, a power switch signal is transmitted to the power unit 20 via the communication lines 53 and 57, and the power unit 20 is activated. When the power unit 20 is activated, information exchange is performed between the power unit 20 and the control circuit 40 via the communication lines 54 and 58, and information exchange can be performed between the control circuit 40 and the portable terminal of the user via the BLE unit 44.

Returning to FIGS. 3 and 4A, a pair of crank pedals 79 are coupled to a left end and a right end of a crankshaft 83 which coaxially penetrates the support pipe 66 of the vehicle body frame 67. The stepping force (hereinafter referred to as a pedal stepping force) applied to the crank pedal 79 from the occupant is transmitted to the crankshaft 83 and input to an endless chain 82 via a drive sprocket 80. The chain 82 is wound around the drive sprocket 80 and a driven sprocket 81 provided on an axle of the rear wheel 78.

In the power unit 20, an output shaft 21 of the motor M and the crankshaft 83 are disposed in parallel. The crankshaft 83 is rotatably supported on an inner side of a cylindrical sleeve 26 via a first one-way clutch 28. At an outer peripheral side of the sleeve 26, a driven gear 26a meshing with a motor output gear 21a provided on the output shaft 21 of the motor M and the drive sprocket 80 are fixed. Therefore, a torque of the motor M is transmitted to the drive sprocket 80 via the motor output gear 21a, the driven gear 26a, and the sleeve 26. That is, the motor M is provided in parallel with the crank pedal 79.

A second one-way clutch 29 is provided between the driven sprocket 81 and the rear wheel 78.

In the electric bicycle 10 configured as described above, when the crank pedal 79 is pedaled in an advancing direction (also referred to as a forward rotation direction or a forward direction), the first one-way clutch 28 is engaged, and forward rotation power of the crankshaft 83 is transmitted to the drive sprocket 80 via the sleeve 26 and is further transmitted to the driven sprocket 81 via the chain 82. At this time, since the second one-way clutch 29 is also engaged, the forward rotation power transmitted to the driven sprocket 81 is transmitted to the rear wheel 78. In this way, the drive sprocket 80, the driven sprocket 81, and the chain 82 constitute a power transmission mechanism T that transmits the power input to the sleeve 26 to the rear wheel 78.

On the other hand, when the crank pedal 79 is pedaled in a reversing direction (also referred to as a reverse rotation direction or a reverse direction), the first one-way clutch 28 is not engaged, reverse rotation power of the crankshaft 83 is not transmitted to the sleeve 26, and the crankshaft 83 idles.

Further, for example, when the forward rotation power in the advancing direction (the forward rotation direction) is input from the rear wheel 78 as in the case where the electric bicycle 10 is pushed in the advancing direction, the second one-way clutch 29 is not engaged and the forward rotation power of the rear wheel 78 is not transmitted to the driven sprocket 81. Therefore, the rear wheel 78 rotates relative to the driven sprocket 81. On the other hand, when the reverse rotation power in the reversing direction (the reverse rotation direction) is input from the rear wheel 78 as in the case where the electric bicycle 10 is pushed in the reversing direction, the second one-way clutch 29 is engaged, and the reverse rotation power of the rear wheel 78 is transmitted to the driven sprocket 81, and is further transmitted to the drive sprocket 80 via the chain 82. At this time, since the first one-way clutch 28 is also engaged, the reverse rotation power transmitted to the drive sprocket 80 is transmitted to the crankshaft 83 and the crank pedal 79, and the crankshaft 83 and the crank pedal 79 are reversely rotated.

The power unit 20 is provided with a motor rotation speed sensor SE1 which detects a rotation speed of the motor M. The motor rotation speed sensor SE1 includes a magnet and a Hall IC provided at an outer peripheral portion of the output shaft 21 of the motor M.

The sleeve 26 is provided with a torque sensor SE2 which detects a pedal torque value Tq generated by the pedal stepping force. The torque sensor SE2 is a magnetic displacement detection type torque sensor disposed on an outer peripheral portion of the sleeve 26.

The control circuit 40 which controls the power unit 20 calculates the pedal stepping force based on the pedal torque value Tq which is an output value of the torque sensor SE2, and performs pulse width modulation (PWM) control over the motor M so that an assist force determined by the pedal stepping force and an assist ratio corresponding to a speed (hereinafter also referred to as a vehicle speed) of the electric bicycle 10 is generated.

More specifically, the control circuit 40 controls the motor M to generate power which correlates with (for example, is proportional to) the power input to the crank pedal 79. Specifically, the control circuit 40 allows the motor M to generate a target torque having a magnitude obtained by multiplying the pedal torque value Tq acquired by the torque sensor SE2 by the assist ratio corresponding to the vehicle speed, and executes assist control of the electric bicycle 10.

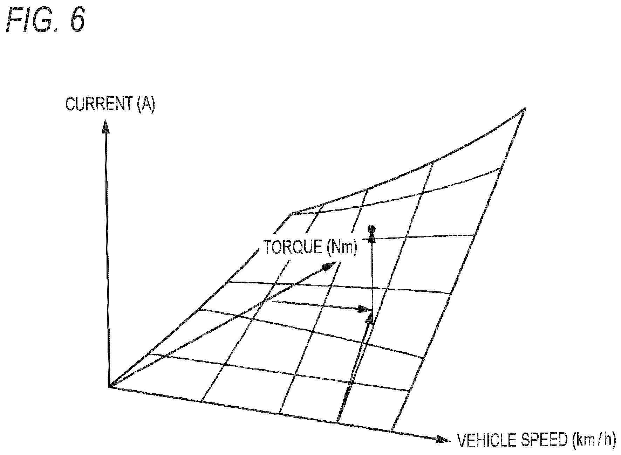

To explain the assist control more specifically, the control circuit 40 acquires the assist ratio corresponding to the current vehicle speed from FIG. 2. Next, the control circuit 40 determines the target torque based on the pedal torque value Tq and the assist ratio as described above. Next, the control circuit 40 sets a target current for the motor M based on a three-dimensional control map as illustrated in FIG. 6 in which the target current corresponding to the vehicle speed and the target torque is set. The control circuit 40 uses a value obtained by multiplying the target current by a predetermined filter function (for example, an infinite impulse response (IIR) filter) as an instruction current and transmits the instruction current to the CPU 22 of the power unit 20 via the communication lines 54 and 58. The motor M outputs power based on the instruction current based on a command from the CPU 22. As the instruction current approaches the target current over time, the power generated from the motor M approaches the target torque. When the instruction current reaches the target current or can be approximated as reaching the target current, the power generated from the motor M reaches the target torque or can be approximated as reaching the target torque.

The rear fork 70 is provided with a rear wheel rotation speed sensor SE3. The rear wheel rotation speed sensor SE3 is, for example, a magnetic detection sensor, and detects a magnetic pulse when a magnet attached to a spoke of the rear wheel 78 passes through the sensor. The rear wheel rotation speed sensor SE3 transmits the detected magnetic pulse as a vehicle speed pulse to the control circuit 40, and the control circuit 40 calculates the vehicle speed based on a pulse interval thereof. In general, only one magnet is attached to the rear wheel 78, and thus the magnetic pulse is detected once per one rotation of the rear wheel 78. Therefore, assuming that the vehicle speed is V [km/h] and a circumferential length of the rear wheel 78 is Ct [m], the vehicle speed V [km/h] is expressed by the following equation (1).

$$V \text{ [km/h]} = \{Ct \text{ [m]/magnetic pulse interval (s)}\} \times 3600/1000 \qquad \dots (1)$$

The rear wheel rotation speed sensor SE3 is attached together with the power unit 20 at the dealer B at the time of attaching the assist device.

A cadence sensor SE4 is attached to a periphery of the drive sprocket 80. Since the drive sprocket 80 rotates integrally with the crank pedal 79 when the first one-way clutch 28 is engaged, the rotation of the drive sprocket 80 can be regarded as the rotation of the crank pedal 79. The cadence sensor SE4 is, for example, a magnetic detection sensor. The drive sprocket 80 is provided with eight magnets evenly spaced in a circumferential direction, and the cadence sensor SE4 detects a magnetic pulse when each of the magnets pass through the sensor. The cadence sensor SE4 transmits the detected magnetic pulse as a cadence pulse (cadence related information) to the control circuit 40 to be described later, and the control circuit 40 calculates cadence indicating a speed of the rotation (motion) of the crank pedal 79 based on a pulse interval thereof. The cadence pulse is detected eight times per one rotation of the crank pedal 79. Therefore, cadence C [rpm] is expressed by the following equation (2).

$$C \text{ [rpm]} = \{1/(8 \times \text{magnetic pulse interval (s)}\} \times 60 \qquad \dots (2)$$

Since the drive sprocket 80 is coupled to the driven gear 26a via the sleeve 26, when a gear diameter of the driven gear 26a is the same as a gear diameter of the motor output gear 21a, the rotation speeds of the drive sprocket 80 and the motor output gear 21a are the same. Therefore, when the motor output gear 21a and the driven gear 26a have the same gear diameter, the cadence C can be acquired by the motor rotation speed sensor SE1. Further, the cadence C may be acquired in parallel by both the cadence sensor SE4 and the motor rotation speed sensor SE1.

Here, a relationship between the rotation speeds of the respective members of the electric bicycle 10 and the gear ratio will be described.

In general, the gear ratio is a rotation speed of an output unit with respect to a rotation speed of an input unit. In the electric bicycle 10, the rotation speed of the input unit is the rotation speed of the sleeve 26, and the rotation speed of the output unit is the rotation speed of the rear wheel 78. In the present embodiment, since the gear ratio between the motor output gear 21a and the driven gear 26a is set to 1, the rotation speed of the sleeve 26 is equal to the rotation speed of the motor M detected by the motor rotation speed sensor SE1. The rotation speed of the sleeve 26 is equal to the rotation speed of the crankshaft 83 in a state where the first one-way clutch 28 is engaged.

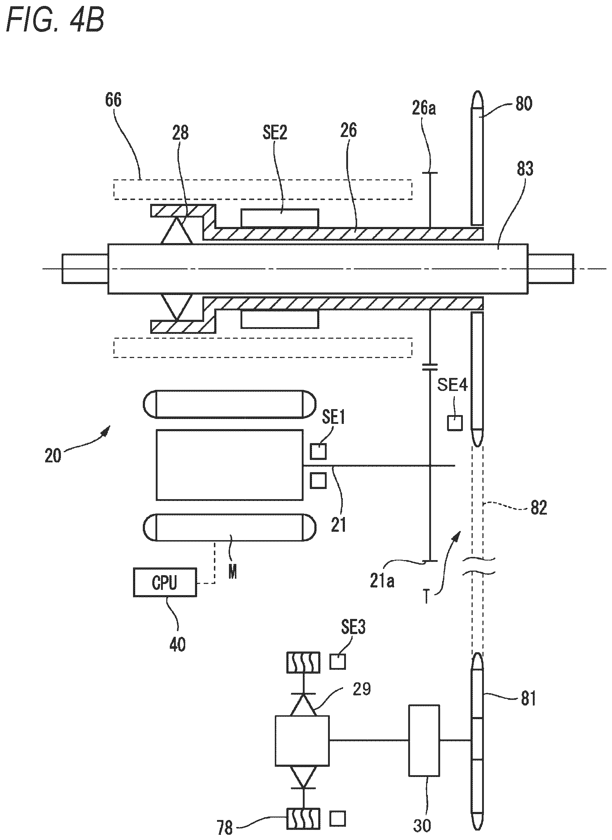

The rotation of the sleeve 26 is changed in speed by a difference in outer diameter between the drive sprocket 80 and the driven sprocket 81, and is further changed in speed by a switching transmission device 30 (see FIG. 4B) freely provided between the driven sprocket 81 and the rear wheel 78. These components constitute the power transmission mechanism T which transmits the power input to the sleeve 26 to the rear wheel 78. The rotation speed of the rear wheel 78 is detected by the rear wheel rotation speed sensor SE3.

Assuming that the rotation speed of the sleeve 26, which is the rotation speed of the input unit, is Ni [rpm], the rotation speed of the rear wheel 78, which is the rotation speed of the output unit, is No [rpm], a gear ratio between the drive sprocket 80 and the driven sprocket 81 is Rg, and a gear ratio of the switching transmission device 30 is Rt, the rotation speed No [rpm] of the rear wheel 78 is expressed by the following equation (3).

$$No\ [rpm] = Ni\ [rpm] \times Rg \times Rt \qquad \dots (3)$$

The gear ratio Rg between the drive sprocket 80 and the driven sprocket 81 in the equation (3) is expressed by the following equation (4), where D [m] is an outer diameter of the drive sprocket 80 and d [m] is an outer diameter of the driven sprocket 81.

$$Rg = \pi D/\pi d = D/d \quad \dots (4)$$

The gear ratio Rt of the switching transmission device 30 is appropriately set.

In addition, when the gear ratio of the power transmission mechanism T (hereinafter, referred to as a composite gear ratio) is set as Rc, the composite gear ratio Rc is expressed by multiplying the gear ratio Rg between the drive sprocket 80 and the driven sprocket 81 by the gear ratio Rt of the switching transmission device 30, as indicated by the equation (5). As in the present embodiment illustrated in FIG. 4A, in the electric bicycle 10 in which the switching transmission device 30 is not provided, Rt = 1.

$$Rc = Rg \times Rt \qquad \dots (5)$$

When the equation (3) is rewritten using the equation (5), the rotation speed No [rpm] of the rear wheel 78 is expressed by the following equation (6) using the rotation speed Ni [rpm] of the sleeve 26 and the composite gear ratio Rc of the power transmission mechanism T.

$$No\ [rpm] = Ni\ [rpm] \times Rc \qquad \dots (6)$$

When the rotation speed No [rpm] of the rear wheel 78 in the equation (6) and the circumferential length Ct [m] of the rear wheel 78 are used, a speed No' [km/h] of the electric bicycle 10 is expressed by the following equation (7).

$$No'\ [km/h] = Ni\ [rpm] \times Rc \times Ct\ [m] \times 60/1000 \quad \dots (7)$$

[Vehicle Body Management Method]

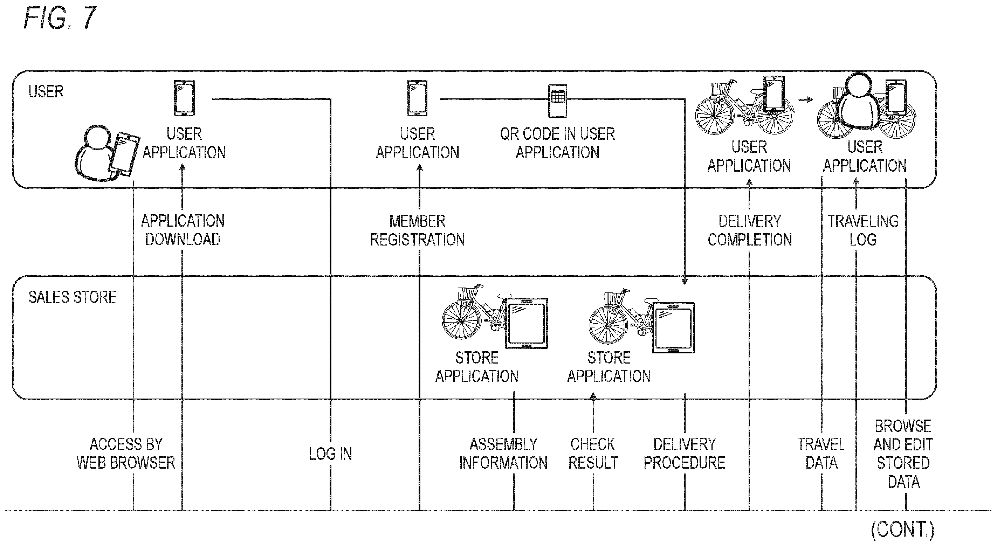

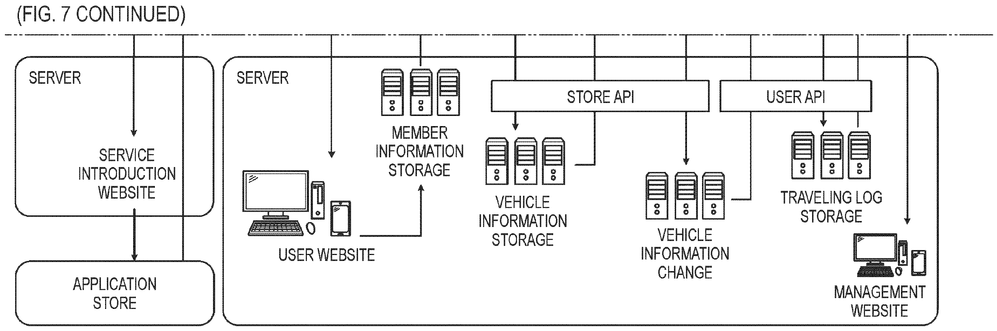

Next, a management method of the electric bicycle 10 will be described. The management method is performed by the store tablet 60 of the dealer B illustrated in FIG. 1. Prior to the detailed description of the management method, the relationship between the user (the user in FIG. 1), the sales store (the dealer B in FIG. 1), and the server (the server of the operator S in FIG. 1) will be described with reference to FIG. 7.

First, the user downloads a user application for facilitating the management of the electric bicycle 10 to the portable terminal 8. The user application is developed by the manufacturer A in FIG. 1. The user application is downloaded before the electric bicycle 10 is purchased (that is, before delivery from the sales store). When downloading, the user accesses a service introduction website of the user application, moves from the service introduction website to an application store, and downloads the user application from the application store. The user may download the user application by directly accessing the application store without accessing the service introduction website.

After downloading the application, the user accesses a user website of the server on the user application, and performs a member registration procedure necessary for using the user application. Specifically, the user inputs user information such as the name, sex, address, mobile number, and mail address of the user. The server stores the user information input by the user and completes member registration of the user. After the member registration, a user ID unique to the user is given to the user application, and the user ID is stored in the server in association with the user information. The user may directly access the user website to perform the member registration procedure instead of using the user application.

The sales store first introduces a store application on the store tablet 60. For example, the sales store accesses the server from the store tablet 60 to download the store application or physically connects a storage medium storing an execution file of the store application to the store tablet 60 to introduce the store application to the store tablet 60. A store ID which is identification information for identifying a sales store is registered in the store application, and different store IDs are registered for each sales store.

The store application and the server are linked via an application programming interface (API). Various processes (for example, screen display, various operations, and the like) in the store application are executed by calling the API.

When assembling the electric bicycle 10, a staff member (or an assembly worker) of the sales store inputs assembly information to the store application. The assembly information includes, for example, vehicle model information and information such as an identification number for identifying a component mounted on the vehicle body. After completing the assembly of the electric bicycle 10, the staff member checks whether the assembly work is properly performed in check items, and further confirms the operation of the electric bicycle 10. The assembly information includes information on the check of the assembly work and the confirmation of the operation of the electric bicycle 10. The assembly information input by the staff member is stored in the server as vehicle information.

After checking the assembly work of the electric bicycle 10 and confirming the operation of the electric bicycle 10, results thereof are displayed on the store tablet 60. When the results are acceptable, the electric bicycle 10 can be delivered (sold) from the sales store to the user.

When purchasing the electric bicycle 10 from the sales store, the user causes a display of the portable terminal 8 to display a QR code (registered trademark) including the user information in the user application. The sales store reads the QR code of the user with the store tablet 60 and acquires the user information. Subsequently, the sales store performs a delivery procedure in the store application, and changes an entity of owing the electric bicycle 10 from the sales store to the user. At this time, the owing entity in the vehicle information stored in the server is changed from the sales store to the user. The electric bicycle 10 is delivered to the user, that is, the purchase of the electric bicycle 10 is completed.

When the user uses the electric bicycle 10, the server acquires travel data, error information of each component, and the like from the portable terminal 8 and/or the control circuit 40 attached to the vehicle body. The travel data, error information, and the like are stored in the server as traveling logs. The user can confirm the traveling logs on the user application. The user can access a management website of the server and browse and edit the data (member information, vehicle information, traveling logs, and the like) stored in the server. The user application and the server are also linked via the API, and various processes (for example, screen display, various operations, and the like) in the user application are executed by calling the API.

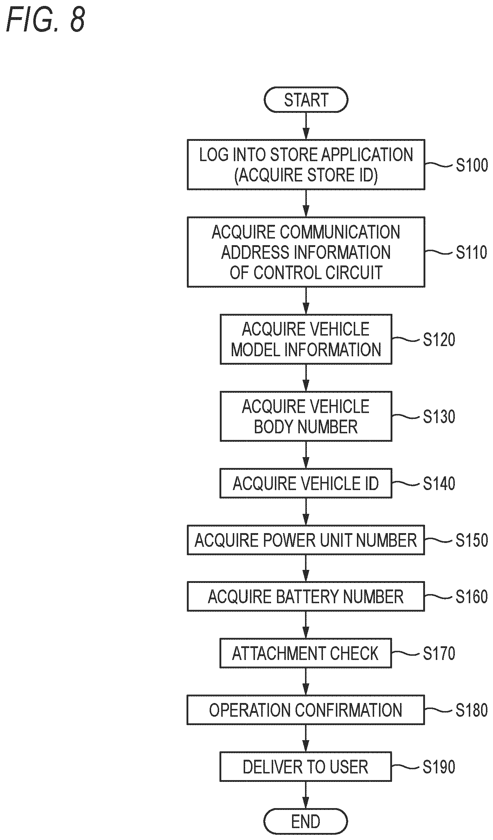

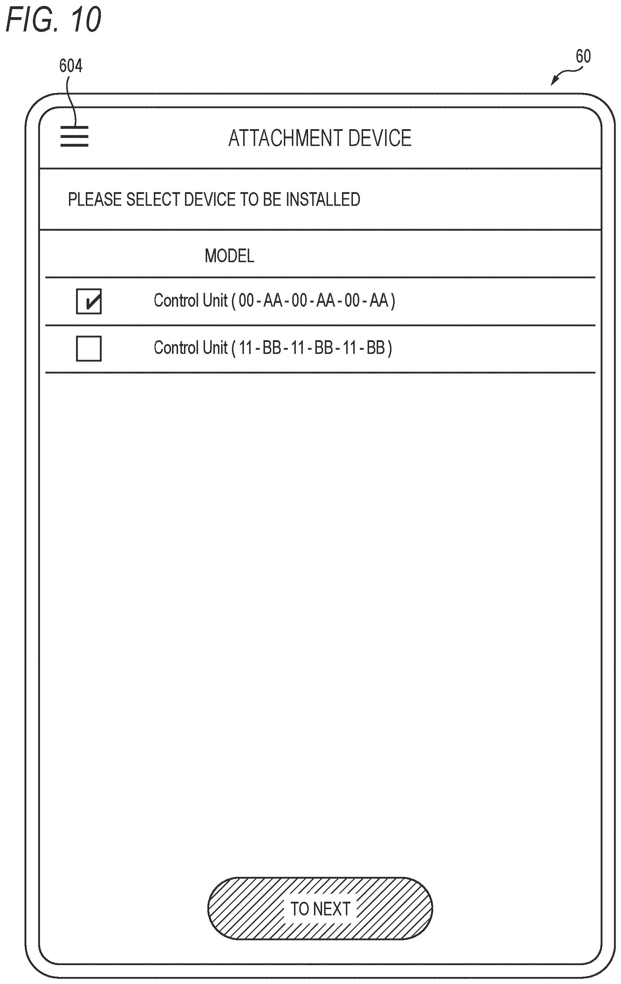

Subsequently, the management method of the electric bicycle 10 performed by the store tablet 60 owned by a sales store X will be described in detail with reference to FIGS. 8 to 26. Although details will be described later, FIGS. 10 to 25 are examples of function screens of the store application displayed on a display of the store tablet 60.

As illustrated in FIG. 8, the management method includes step S100 to step S160 performed when the assist device is attached, step S170 of checking an attachment work, step S180 of confirming an operation of the electric bicycle 10 after the attachment, and step S190 performed at the time of delivery to the user. The staff member of the sales store X operates the store application introduced to the store tablet 60 and performs steps S100 to S190.

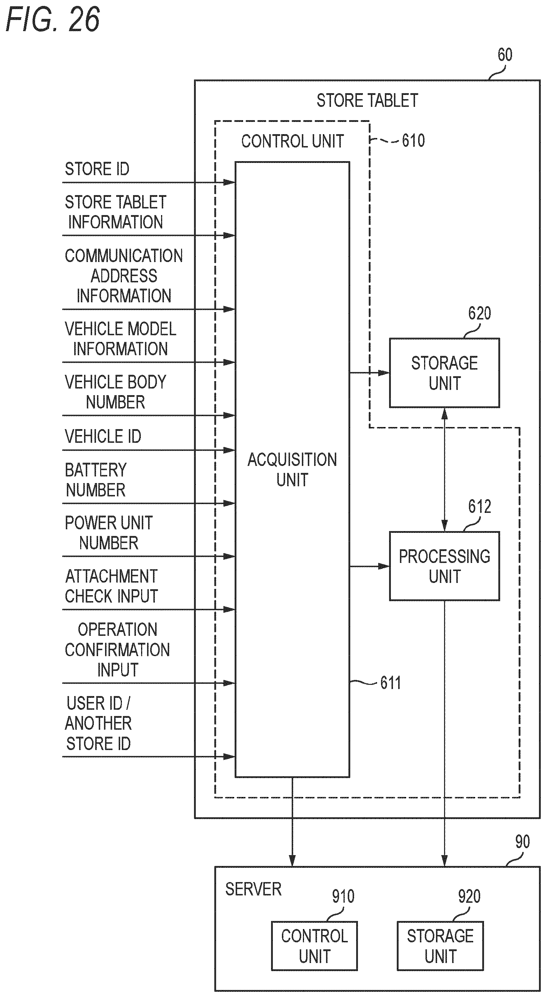

As illustrated in FIG. 26, the store tablet 60 includes, for example, a control unit 610 including a CPU capable of executing various calculations and a RAM used as a work area of the CPU, and a storage unit 620 such as a ROM that stores various kinds of information. The control unit 610 includes an acquisition unit 611 that acquires various types of vehicle information to be described later, and a processing unit 612 that associates the various types of vehicle information acquired by the acquisition unit. The storage unit 620 stores various types of vehicle information acquired by the acquisition unit 611 and information associated with the processing unit 612. The store tablet 60 and the server 90 are wirelessly connected via a mobile communication system or the like. The server 90 includes a control unit 910 implemented by a processor executing a program stored in a storage device of the computer that implements the server 90, and a storage unit 920 that stores a processing result of the control unit 910 and information from the store tablet 60.

(Attachment Process)

First, a flow performed when the assist device is attached will be described. A staff account (also referred to as a staff ID) is assigned in advance to the staff member of the sales store X that attaches the assist device to the vehicle body frame 67. The staff member logs in the store application of the store tablet 60 with the assigned staff account during the attachment work (step S100).

Further, each sales store is given a unique store ID which is identification information for identifying the sales store. When the staff member of the sales store X logs into the store application, the store ID of the sales store X is specified in the store application by the staff member inputting (or selecting) the store ID, in other words, in step S100, the store tablet 60 acquires the store ID of the sales store X. In this way, the store tablet 60 and the store ID of the sales store X are associated with each other by logging into the store application. In step S100, the store tablet 60 may acquire the staff ID in addition to or instead of the store ID, and the store tablet 60 and the staff ID may be associated with each other. The store ID of the sales store X and store tablet information (for example, media access control (MAC) address) which is identification information for identifying the store tablet 60 may be associated with each other. The server 90 acquires log-in information for the store application, and stores the person, time, and sales store of performing the work. Hereinafter, although an aspect will be described in which the store tablet 60 and the store ID are associated and the work to be described later is performed using the store ID, the present invention is not limited thereto, and the work can be performed in the same manner using the staff ID.

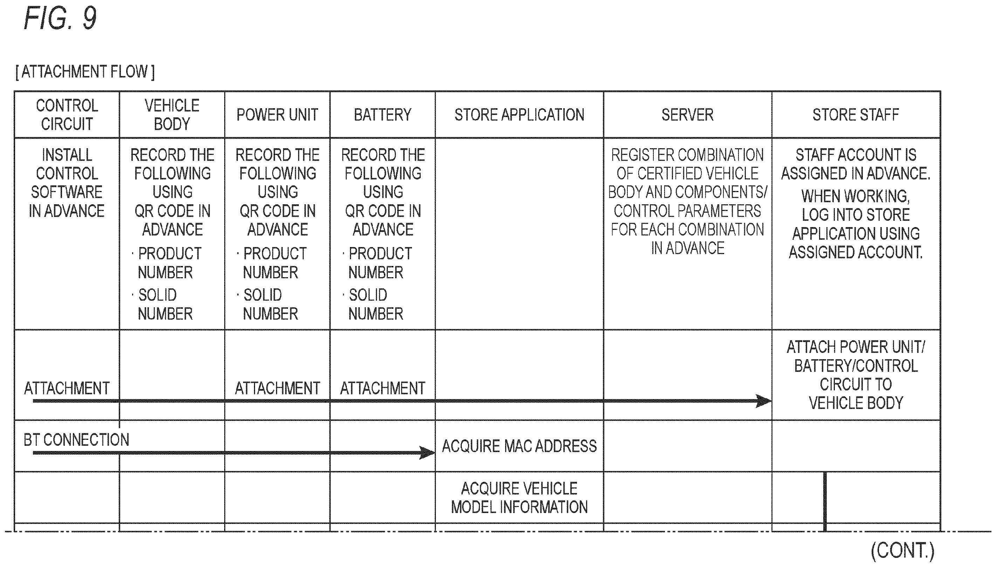

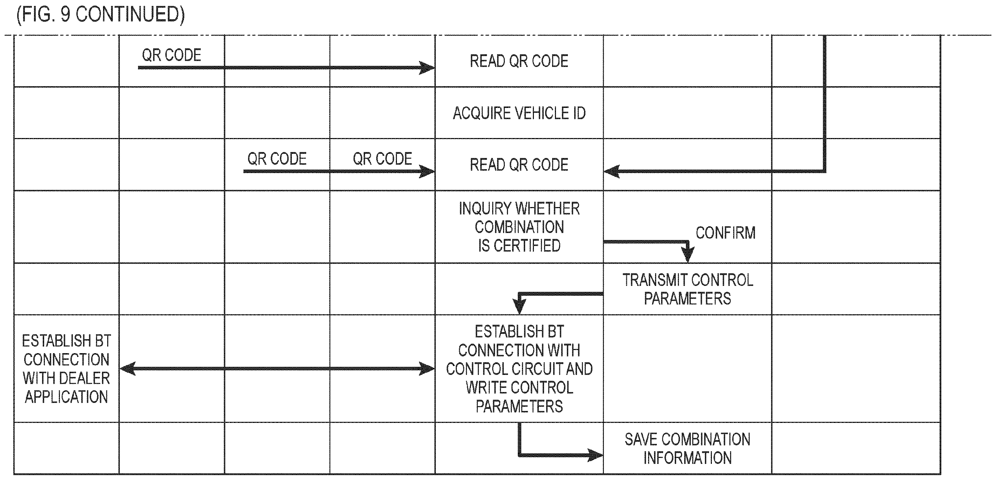

Subsequently, the staff member of the sales store X attaches the control circuit 40, the power unit 20, and the battery 2 to the vehicle body frame 67. FIG. 9 shows an example of the flow performed when the assist device is attached. The component attachment work may be performed before logging into the store application.

Returning to FIG. 8, after (or when) each component is attached, the store tablet 60 acquires communication address information which is identification information for identifying the control circuit 40 (step S110). The communication address information is, for example, a MAC address, and is information unique to the control circuit 40. Specifically, the control circuit 40 is provided so as to be capable of communicating (specifically, connected via BT) with the store tablet 60, and the store tablet 60 receives the communication address information transmitted from the control circuit 40.

FIG. 10 is an example of a store application screen for selecting the control circuit 40 (denoted as a "device" or "control unit" in the figure) displayed on the display of the store tablet 60. The communication address information (12-digit alphanumeric characters) of the control circuit 40 is selectably displayed on the store tablet 60. When the store tablet 60 receives communication address information of another control circuit different from the control circuit 40, the communication address information of another control circuit is also selectably displayed on the display of the store tablet 60. In the example shown in FIG. 10, the communication address information of two control circuits is displayed in a list on the display, but the communication address information of three or more control circuits may be displayed in a list on the display. The staff member of the sales store X confirms communication address information written on, for example, a seal attached to the control circuit 40. The staff member selects the communication address information of the attached control circuit 40 on the store tablet 60, and thus, connection between the store tablet 60 and the control circuit 40 is established. When the communication address information is selected, a personal identification number (PIN) code is required, but an initial PIN code at the stage of attaching the assist device is the same for all control circuits.

Since the store tablet 60 and the control circuit 40 are connected, the association between the store ID of the sales store X registered in the store tablet 60 and the communication address information is completed. In this way, the sales store X can manage the control circuit 40 in association with the store ID of the sales store X.

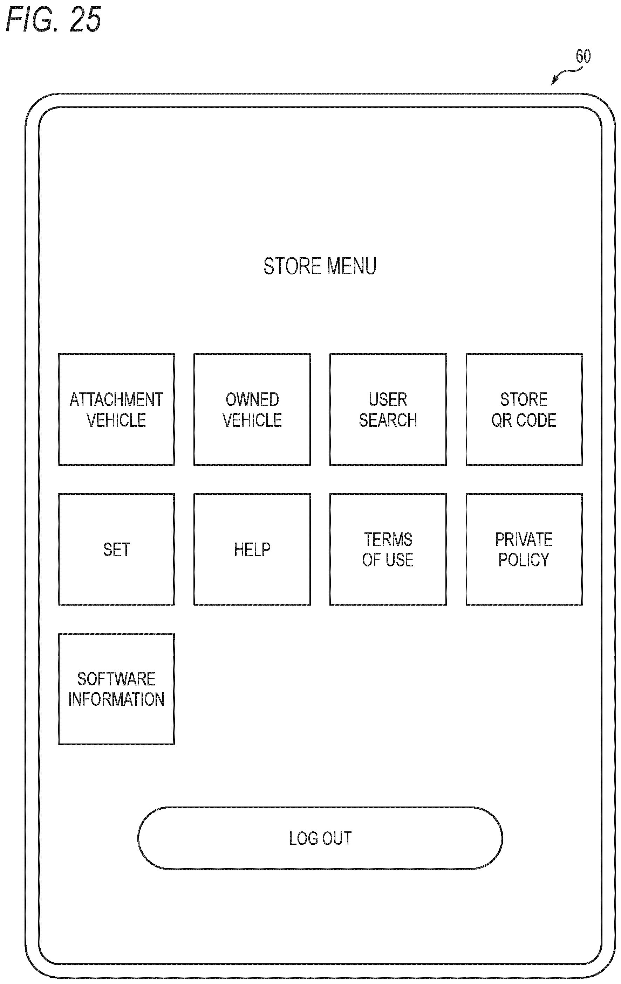

A menu button 604 is displayed at a left upper end of the store application screen (see FIGS. 10 to 12 and FIGS. 14 to 24). When the menu button 604 is selected, a store menu in FIG. 25 is displayed, and buttons for managing a vehicle owned by the sales store X, managing a user (a customer for the sales store X), setting the store application, and the like are displayed.

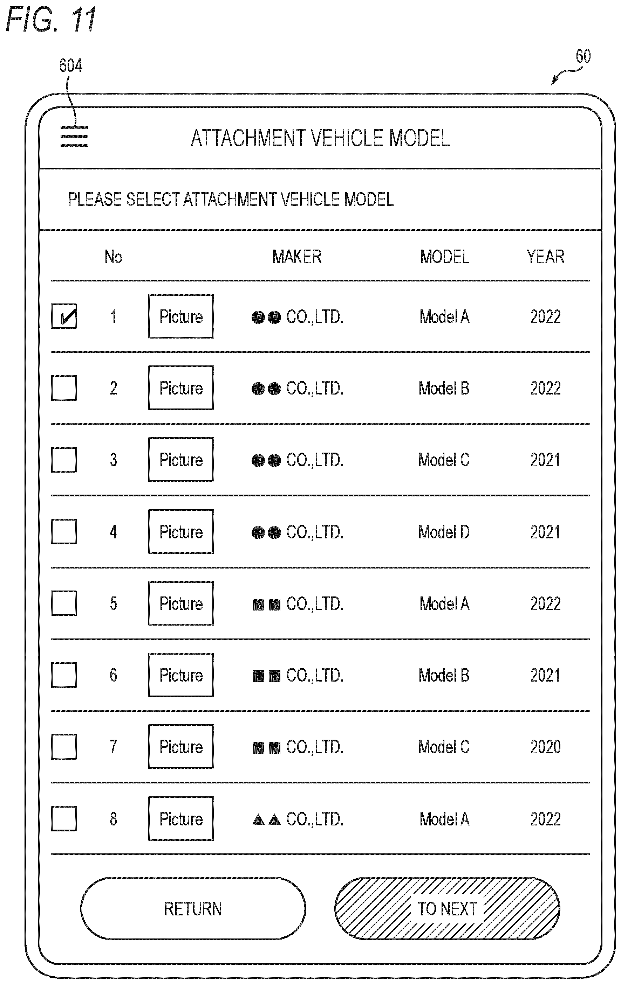

Returning to FIG. 8, after step S110, the store tablet 60 acquires vehicle model information of the electric bicycle 10 (step S120). The vehicle model information includes information such as a picture of a vehicle body, a manufacturer, a model of the vehicle body, and a date of initial marketing, and a plurality of vehicle models are registered in advance in the store application. Specifically, when the control circuit 40 is selected, as illustrated in FIG. 11, a list of a plurality of vehicle models registered in the store application is displayed on the display of the store tablet 60. The staff member of the sales store X selects a vehicle model subjected to the attachment work, and thus, the association between the store ID of the sales store X and the vehicle model information is completed. The order of step S110 and step S120 may be changed.

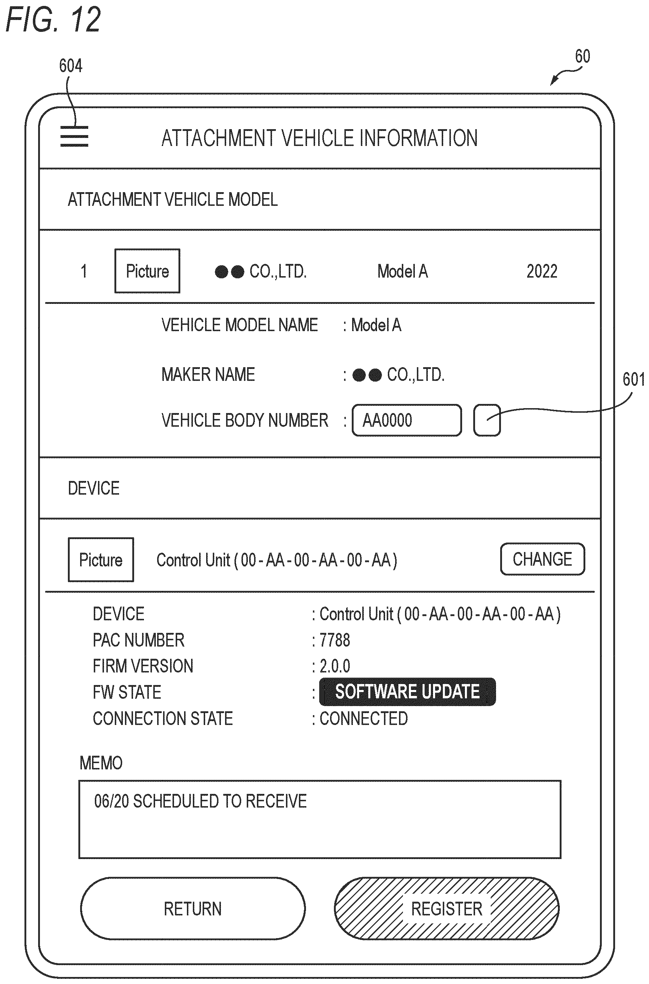

After step S120, the store tablet 60 acquires a vehicle body number which is identification information for identifying the vehicle body frame 67 (step S130). The vehicle body number is a unique number that differs for each vehicle body frame. For example, even if the vehicle model is the same, the vehicle body number is different. To explain specifically about obtaining the vehicle body number, after the control circuit 40 and the vehicle model are selected, as illustrated in FIG. 12, a vehicle information screen showing information on the control circuit 40 and the vehicle model is displayed on the store tablet 60. When the staff member of the sales store X selects a button 601 arranged in a vicinity of the "vehicle body number" in the screen, a QR code reader is activated. When the staff member reads a QR code provided in advance on the vehicle body frame 67 with the QR code reader (see FIG. 9), the vehicle body number is registered in the store application, and the association between the store ID of the sales store X and the vehicle body number is completed. The vehicle body number is also associated with the communication address information and the vehicle model information that are already associated with the store ID of the sales store X. After reading the QR code, the vehicle body number is displayed on the screen. In FIG. 12, the vehicle body number is displayed as "AA0000". By reading the QR code, erroneous input can be prevented unlike a case where the vehicle body number is directly input by character input. However, the vehicle body number may be obtained by directly inputting the vehicle body number by character input.

In the screen illustrated in FIG. 12, since the vehicle model information, the vehicle body number, the communication address information, and the like are simultaneously displayed on the display of the store tablet 60, the staff member of the sales store X can easily visually confirm the information, and it is possible to prevent the occurrence of mistakes in these associations.

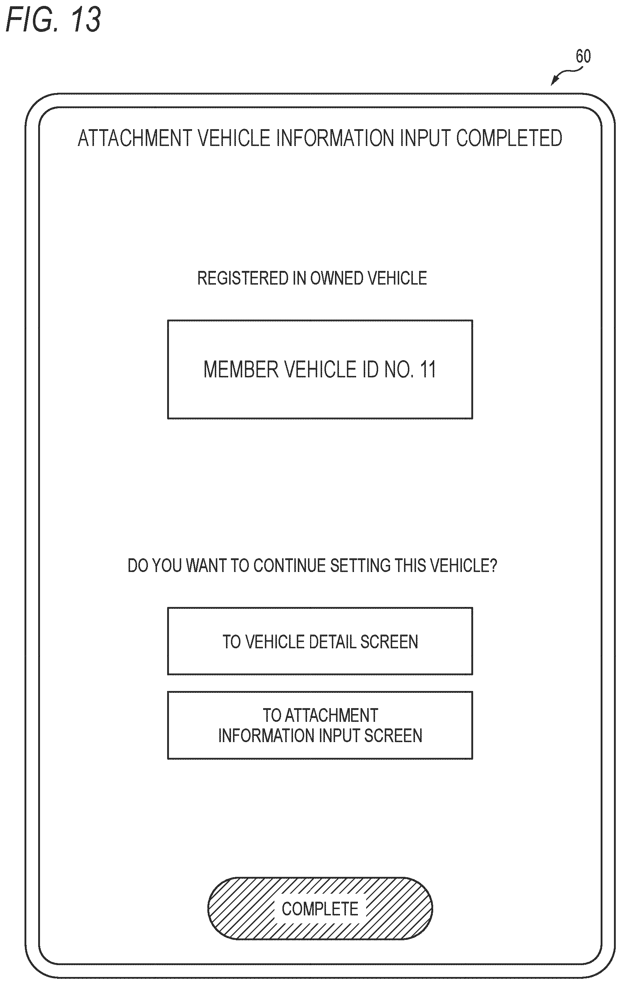

After step S130, the store tablet 60 acquires a vehicle ID which is identification information for identifying the electric bicycle 10 as a completed vehicle (step S140). Specifically, after the control circuit 40 and the vehicle body frame 67 are selected, the vehicle ID is given, and as illustrated in FIG. 13, the vehicle ID (a "member vehicle ID" in FIG. 13) is displayed on the store tablet 60. The vehicle ID is unique information given to the electric bicycle 10 after the association between the communication address information of the control circuit 40 and the vehicle body number of the vehicle body frame 67 is completed. When the vehicle ID is given, the store ID of the sales store X, the communication address information, the vehicle model information, and the vehicle body number are associated with the vehicle ID.

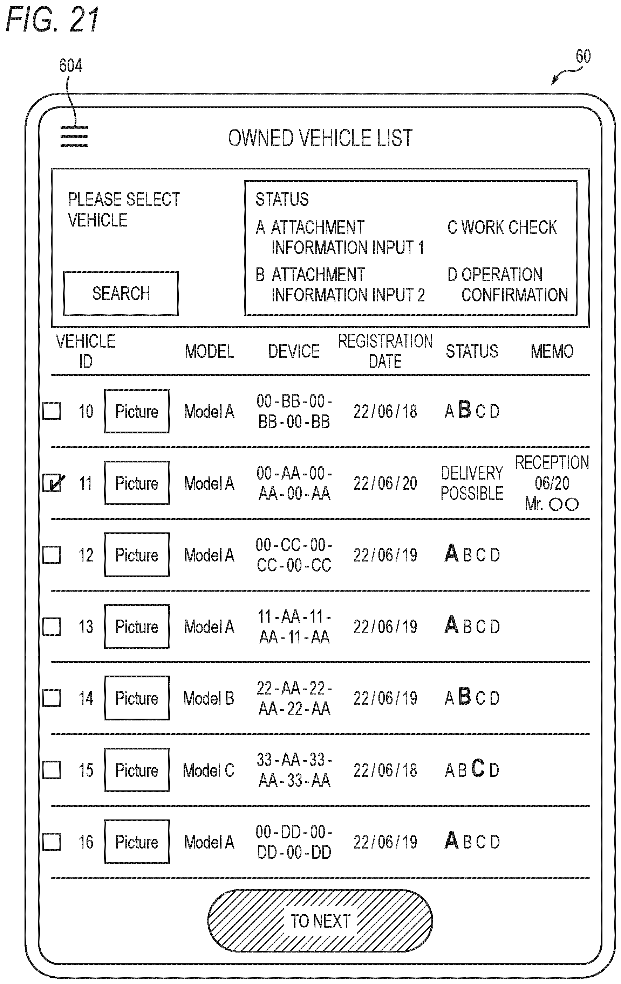

When the vehicle ID is associated with the store ID of the sales store X, the electric bicycle 10 is registered as a vehicle owned by the sales store X (see FIG. 21). This can be interpreted as an initial setting of an ownership of the electric bicycle 10 to the sales store X. Accordingly, the store tablet 60 of the sales store X can appropriately manage vehicles owned by its own store. Only vehicles to which the vehicle IDs associated with the store ID of the sales store X are given are displayed on an owned vehicle list screen in FIG. 21, and vehicles of the other stores associated with store IDs of sales stores other than the sales store X are not displayed. In addition to information such as the owing entity, the communication address information, and the vehicle body number of the electric bicycle 10, the vehicle ID is also associated with information such as a previous owing entity of the electric bicycle 10 and a status of the electric bicycle 10 (details will be described later).

When a "complete" button is selected on a screen in FIG. 13, the staff member of the sales store X can interrupt the attachment work of the assist device. Accordingly, it is also possible for another staff member to be in charge of the work (from step S150) to be described later, for example.

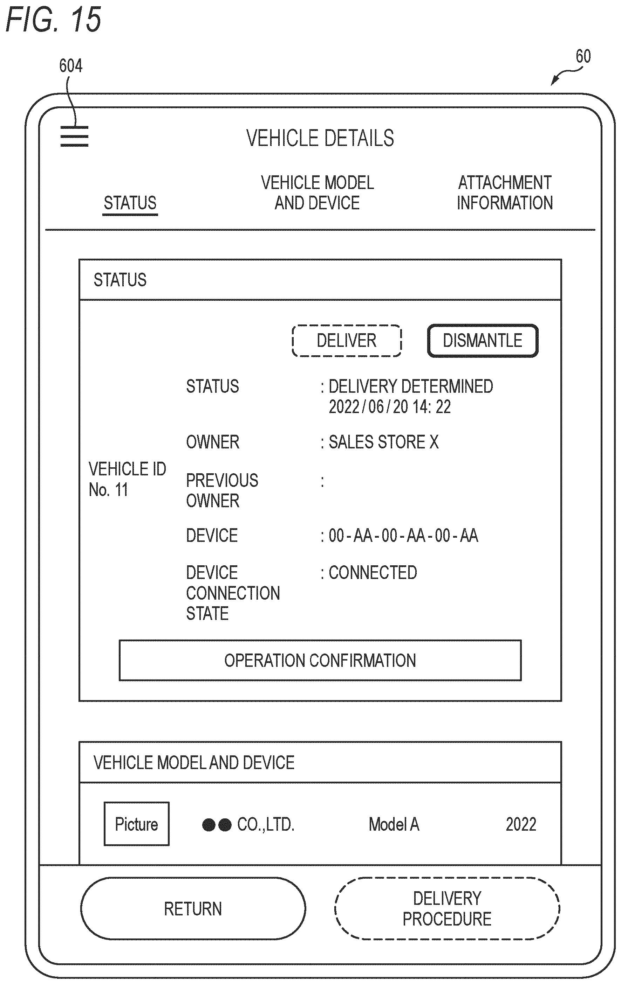

When a "to vehicle detail screen" button is selected on the screen in FIG. 13, the screen transitions to a screen in FIG. 15, and the vehicle information of the electric bicycle 10 to which the vehicle ID is given can be confirmed. The screen in FIG. 15 displays various kinds of information that have been associated up to step S140. For example, "No. 11" as the vehicle ID, "sales store X" as the owing entity (an "owner" in the figure), "00-AA-00-AA-00-AA" as the communication address information of the control circuit 40 (a "device" in the figure) are displayed.

Further, the screen in FIG. 15 displays "delivery procedure" and "deliver" buttons, which will be described later, but these buttons cannot be selected until an attachment check and operation confirmation, which will be described later, are completed.

A "dismantle" button is displayed on the screen in FIG. 15. When the "dismantle" button is selected, an association relationship among the store ID, the communication address information, the vehicle model information, the vehicle body number, and the vehicle ID, which are associated with each other, is canceled. In a case where a power unit number, a battery number, and the like, which will be described later, are further associated, when the "dismantle" button is selected, an association relationship therebetween is also canceled. That is, the "dismantle" button receives an input of a request or an instruction from an entity of owning or others (here, the sales store X) that cancels the association of the identification information.

More specifically, releasing the association relationship of the identification information includes deleting at least one of the plurality of identification information, and when the "dismantle" button is selected, the control unit 610 of the store tablet 60 deletes the at least one piece of identification information. Releasing the association relationship of the identification information may include changing at least one of the plurality of identification information to another identification information instead of or in addition to deleting the identification information. Accordingly, the staff member of the sales store X can detach the attached components and reattach the other components. When the association is performed again after the "dismantle" button is input, the management method of the electric bicycle 10 starts from step S110.

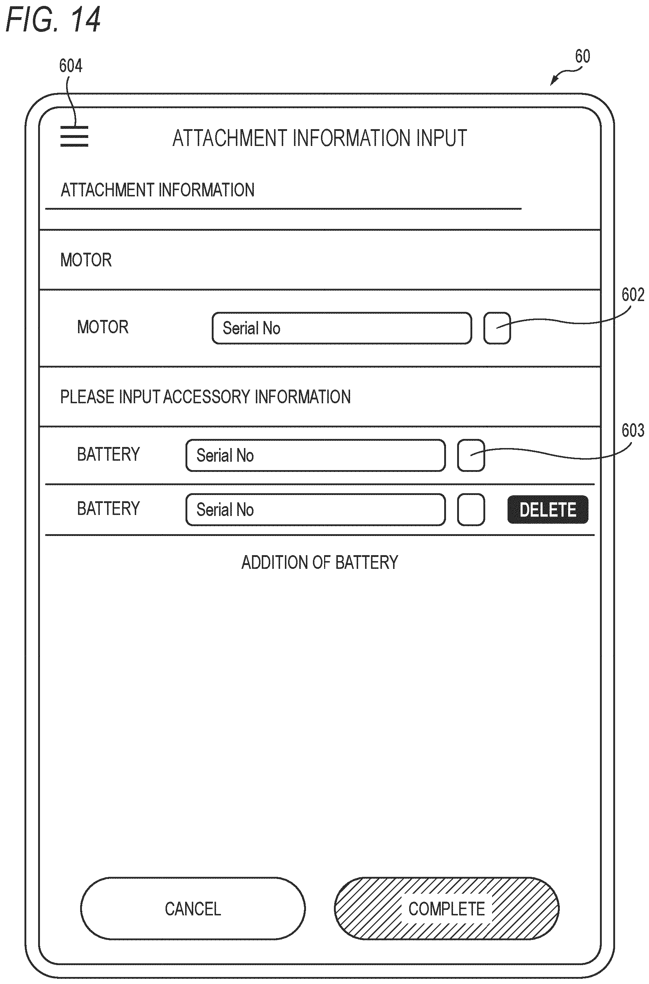

When a "to attachment information input screen" button is selected on the screen in FIG. 13, the management method proceeds to step S150 performed on a screen in FIG. 14.

In step S150, the store tablet 60 acquires a power unit number which is identification information for identifying the power unit 20. Specifically, after the vehicle ID is acquired, as illustrated in FIG. 14, a screen for acquiring the power unit number is displayed on the store tablet 60. The staff member of the sales store X touches a button 602 arranged in a vicinity of the "motor" in the display screen to activate the QR code reader. When the staff member reads the QR code provided in advance on the power unit 20 with the QR code reader (see FIG. 9), the power unit number is registered in the store application, and the association between the store ID of the sales store X and the power unit number is completed. The power unit number is also associated with the communication address information, the vehicle body number, the vehicle model information, and the vehicle ID that are already associated with the store ID. After reading the QR code, the power unit number is displayed on the screen in FIG. 14. The acquisition of the power unit number is not limited to the reading of the QR code, and the power unit number may be directly input and acquired by character input.

After step S150, the store tablet 60 acquires a battery number which is identification information for identifying the battery 2 (step S160). Specifically, the battery number can also be acquired on the screen shown in FIG. 14. The staff member of the sales store X touches a button 603 arranged in a vicinity of the "battery" in the display screen to activate the QR code reader. When the staff member reads a QR code provided in advance on the battery 2 with the QR code reader (see FIG. 9), the battery number is registered in the store application, and the association between the store ID of the sales store X and the battery number is completed. The battery number is also associated with the communication address information, the vehicle body number, the vehicle model information, the vehicle ID, and the power unit number that are already associated with the store ID. After reading the QR code, the battery number is displayed on the screen in FIG. 14. The acquisition of the battery number is not limited to the reading of the QR code, and the number may be directly input and acquired by character input. In a case where a plurality of batteries are mounted on the electric bicycle 10, a plurality of battery numbers can be acquired. The order of step S150 and step S160 may be changed.

In the screen illustrated in FIG. 14, since the power unit number and the battery number are simultaneously displayed on the display of the store tablet 60, the staff member of the sales store X can easily visually confirm the information, and it is possible to prevent the occurrence of mistakes in these associations.

As described above, the store tablet 60 (the store application) acquires the store ID, the communication address information, the vehicle model information, the vehicle body number, the vehicle ID, the power unit number, and the battery number (hereinafter also simply referred to as vehicle information), and associates the information with each other. The acquisition of the vehicle information is performed by the acquisition unit 611 of the store tablet 60, and the association of the vehicle information is performed by the processing unit 612 of the store tablet 60. Accordingly, the sales store X which is the owing entity of the electric bicycle 10 can appropriately manage the information (that is, the store ID of the sales store X) on the electric bicycle 10 or the components constituting the electric bicycle 10, and the owing entity of the electric bicycle 10.

The store ID, the communication address information, the vehicle model information, the vehicle body number, the vehicle ID, the power unit number, and the battery number are stored in the storage unit 620 of the store tablet 60. The information is transmitted from the store tablet 60 to the server 90 (see FIGS. 7 and 26) as vehicle information, and is also stored in the storage unit 920 of the server 90. Therefore, the vehicle information of the electric bicycle 10 is appropriately managed by the store tablet 60 of the sales store X, and is also appropriately managed by the server 90. Various kinds of information acquired by the store tablet 60 may be stored in the storage unit 620 at any time, or may be transmitted to the server 90 and stored in the storage unit 920, or may be stored and transmitted every time a predetermined step is completed or after all steps are completed.

After step S160, as illustrated in FIG. 9, based on the vehicle information acquired in the aforementioned steps and associated with each other, the store application inquires of the server 90 whether the combination is certified, that is, whether the vehicle is a certified vehicle.

When the server 90 receives the inquiry, the server confirms whether the inquired combination is a certified combination. When the vehicle is a certified vehicle, the server 90 transmits control parameters associated with the combination to the store application. When the vehicle is not a certified vehicle, a message indicating that the vehicle is not a certified vehicle is transmitted to the store application. In this way, it is possible to easily determine whether the electric bicycle 10 is a certified vehicle based on the vehicle information associated with each other.

Upon receiving the control parameters, the store application establishes a BT connection with the control circuit 40 and writes the control parameters to the control circuit 40. The server 90 stores combination information. The staff member of the sales store X may also save a state of the attached electric bicycle 10 accordingly. The staff account of the staff member of the sales store X may be stored in association with the combination information or the like, and further the user information may be stored in association with the combination information or the like. Such information stored in the server 90 can be acquired from the store tablet 60, in which the store application is installed, at any time in response to a request.

(Attachment Check Process)

After the assist device is attached, the staff member of the sales store X performs an attachment check of step S170 in FIG. 8.

In step S170, the staff member of the sales store X confirms whether the assist device is correctly attached to the electric bicycle 10 while performing the attachment check of the assist device on the store application. In the store application and the server 90, attachment check items matching the store are registered in advance. After the assist device is attached, the store application displays the registered attachment check items on the store tablet 60. The staff member of the sales store X advances confirmation work according to the check items displayed on the store tablet 60.

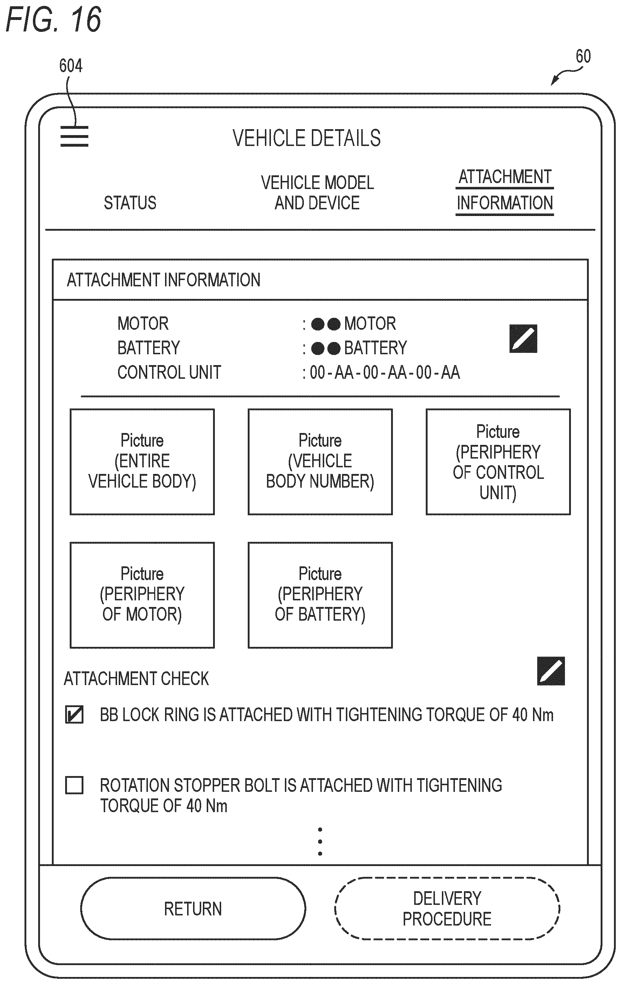

FIG. 16 is an attachment check screen displayed when the attachment check is performed. The screen in FIG. 16 exists on the same page as the screen in FIG. 15, and is displayed when the screen in FIG. 15 is scrolled downward. The screen in FIG. 16 is also displayed when an "attachment information" tab displayed on an upper part of the screen in FIG. 15 is selected. In the "attachment check" displayed on a lower side of the screen in FIG. 16, a plurality of check items are displayed. In FIG. 16, only a part of the plurality of check items is displayed, and the remaining items are displayed by the staff member of the sales store X scrolling the screen downward. For example, the following 22 items are displayed as check items.

1. "A BB lock ring is attached with a tightening torque of 40 Nm."
2. "A rotation stopper bolt is attached with a tightening torque of 40 Nm."
3. "A battery base and a frame are attached with a tightening torque of 5 Nm."
4. "All connectors are set in a connector holder of a control unit."
5. "A cord is not engaged with a fastening portion of the control unit and the battery base."

6. "A connector of the control unit is inserted deeply."

7. "The control unit is not in contact with the frame."

8. "A mounting bolt of the control unit is attached with a specified bolt."

9. "The control unit and the battery base are attached without any play."

10. "The connector of the battery base is inserted deeply."

11. "A speed sensor is not in contact with a wheel or a magnet."

12. "The speed sensor is fixed so as not to move to the frame."

13. "The magnet of the speed sensor is fixed so as not to move to the spoke."

14. "A front surface of the magnet of the speed sensor faces an arrow mark on the sensor side."

15. "A clearance between the speed sensor and the magnet is 5 to 10 mm."

16. "It is not in contact with a rotating portion and a movable portion even if a cord portion is pulled (especially gears, chains, wheels, cranks)."

17. "There is no twisting or excessive bending in the cord portion."

18. "A braking device operates correctly."

19. "All lights operate correctly."

20. "There is no abnormal sound, abnormal vibration, and rattling during traveling."

21. "There is no abnormality such as unusual odor, smoking, ignition, or the like in a state where the battery is connected."

22. "The gear has been shifted to the maximum gear stage."

Here, the 22nd item is displayed only when the aforementioned switching transmission device 30 (see FIG. 4B) is present. The "maximum gear stage" refers to a gear stage that is the maximum gear ratio when the switching transmission device 30 is present. The item is to ensure that the operation check is performed at the maximum gear stage at the time of the operation confirmation to be described later.

The staff member of the sales store X checks the attachment check items on the store application, and the store application confirms that all the attachment checks are completed.

In the screen in FIG. 16, a region for saving pictures of the electric bicycle 10 and a periphery of the assist device is displayed. The staff member of the sales store X takes, for example, an entire picture of the electric bicycle 10, a picture of the vehicle body number, a picture of a periphery of the control circuit 40, a picture of a periphery of the motor M (the power unit 20), and a picture of a periphery of the battery 2 before and after checking the attachment check items (see FIG. 9), and saves the pictures in the store tablet 60.

(Operation Confirmation Process)

Returning to FIG. 8, when the attachment check (checking all check items and saving pictures) of step S170 is completed, the staff member of the sales store X confirms whether the electric bicycle 10 operates correctly while checking the operation confirmation of the electric bicycle 10 on the store application (step S180). Specifically, when the attachment check is completed, the store application establishes a BT connection with the control circuit 40 and turns on a power supply of the control circuit 40. The control circuit 40 is energized by the power unit 20 and the battery 2 to perform self-diagnosis of presence or absence of an error, and transmits a diagnosis result to the store application. The store application displays an error number when there is an error, and displays an operation confirmation method on the store tablet 60 when there is no error. The staff member of the sales store X advances the operation confirmation according to the check items displayed on the store tablet 60. The staff member rotates the crank pedal 79 in idle by hand in a state where the rear wheel 78 is raised, or rotates the crank pedal 79 in a bench test.

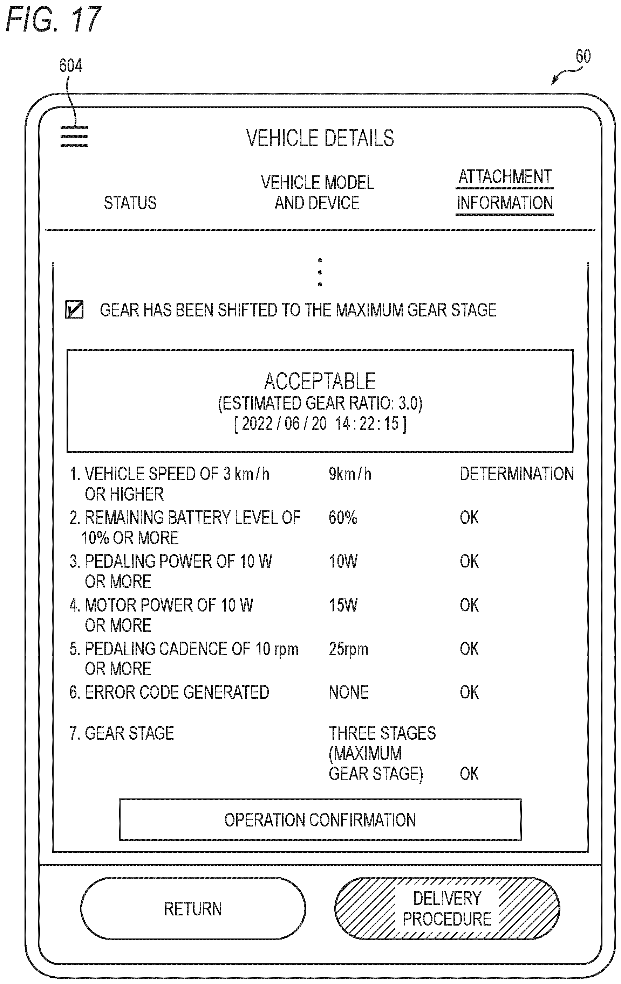

FIG. 17 is an operation confirmation screen displayed when the operation confirmation of the electric bicycle 10 is performed. The screen in FIG. 17 exists on the same page as the screens of FIGS. 15 and 16, and is displayed when the screen in FIG. 16 is scrolled downward. More specifically, the operation confirmation screen is displayed under the last item of the attachment check. An "operation confirmation" button displayed on a lower side of FIG. 17 is configured to be selectable when the attachment check in step S170 is completed, and unselectable when the attachment check is not completed. The staff member of the sales store X selects the "operation confirmation" button when starting the operation confirmation.

As illustrated in FIG. 17, the staff member confirms the following 7 check items as the operation confirmation.

1. "A vehicle speed of 3 km/h or higher"

2. "A remaining battery level of 10% or more"

3. "Pedaling power of 10 W or more"

4. "Motor power of 10 W or more"

5. "Pedaling cadence of 10 rpm or more"

6. "Error code generated"
7. "Gear stage"

When the check of all check items is completed within a predetermined time from the time when the "operation confirmation" button is selected, a determination result of the operation confirmation is "acceptable".

When the result of the operation confirmation is that there is an error, the store application displays an error number or prompts work correction or component replacement. When there is no error, for example, a determination result ("OK" in FIG. 17) for each item and a determination result ("acceptable" in FIG. 17) for all items are displayed. The store application preferably displays a date and time when the determination is made, together with the determination results. The store application may display the gear ratio (an estimated gear ratio) calculated by rotation in idle together with or separately from the display of the determination results.

The estimated gear ratio is the composite gear ratio Rc calculated according to the equation (5) when the gear ratio Rg between the drive sprocket 80 and the driven sprocket 81 and the gear ratio Rt of the switching transmission device 30 are known. In addition, the estimated gear ratio may be the composite gear ratio Rc calculated according to the equation (6), instead of the equation (5), based on the rotation speed of the motor M detected by the motor rotation speed sensor SE1 in actual traveling and the rotation speed of the rear wheel 78 detected by the rear wheel rotation speed sensor SE3, or may be the composite gear ratio Rc calculated in the bench test. The composite gear ratio Rc is acquired by the control circuit 40 when the maximum gear stage is set. The composite gear ratio Rc calculated as described above is also referred to as a reference composite gear ratio Rc1, that is, the estimated gear ratio displayed in FIG. 17 is the reference composite gear ratio Rc1.

As information to be compared with the reference composite gear ratio Rc1, during traveling of the electric bicycle 10 after delivering to the user, the control circuit 40 calculates the composite gear ratio Rc according to the equation (6) based on the rotation speed of the motor M detected by the motor rotation speed sensor SE1 and the rotation speed of the rear wheel 78 detected by the rear wheel rotation speed sensor SE3 at all times or at a predetermined cycle. The composite gear ratio Rc is referred to as a present composite gear ratio Rc2. The present composite gear ratio Rc2 is a gear ratio detected without using the reference composite gear ratio Rc1, and may be calculated according to an equation obtained by modifying the equation (7) using another method (for example, a GPS, a cycle computer, or the like to be described later). It is preferable that the present composite gear ratio Rc2 is the gear ratio in the gear stage (the maximum gear stage) having the largest gear ratio. By comparing the reference composite gear ratio Rc1 with the present composite gear ratio Rc2, it is possible to manage the remodeling and improvement after the attachment, which may cause the regulation non-compliance state.

Returning to FIG. 17, in the case of a certified vehicle, since an assumed gear ratio can be obtained, it is possible to compare the estimated gear ratio with the assumed gear ratio and confirm whether the estimated gear ratio is the same as the assumed gear ratio by confirming the estimated gear ratio (the reference composite gear ratio Rc1) displayed in FIG. 17. In the case of a certified vehicle, the gear ratio (the estimated gear ratio) calculated by rotation in idle and the assumed gear ratio should be the same value. Accordingly, probability of the estimated gear ratio can be improved, and it is possible to more accurately compare the reference composite gear ratio Rc1 and the present composite gear ratio Rc2 after delivery of the electric bicycle 10.

The store application transmits the operation confirmation result and the estimated gear ratio to the server 90, and the server 90 stores the operation confirmation result and the estimated gear ratio. When the operation confirmation is completed, the server 90 registers the electric bicycle 10 as an inspected electric bicycle. When the operation confirmation is completed, the "delivery procedure" button displayed in the lower part of the vehicle detail screen in FIGS. 15 to 17 can be selected.

(Delivery Process)

Returning to FIG. 8, after step S180, the store tablet 60 performs a delivery procedure of the electric bicycle 10 from the sales store X to the user (step S190). The delivery procedure is a procedure for changing the owing entity of the electric bicycle 10 from the sales store X to the user. The change from the sales store X of the owing entity of the electric bicycle 10 to the user can be regarded as transferring the ownership of the electric bicycle 10 from the sales store X to the user.

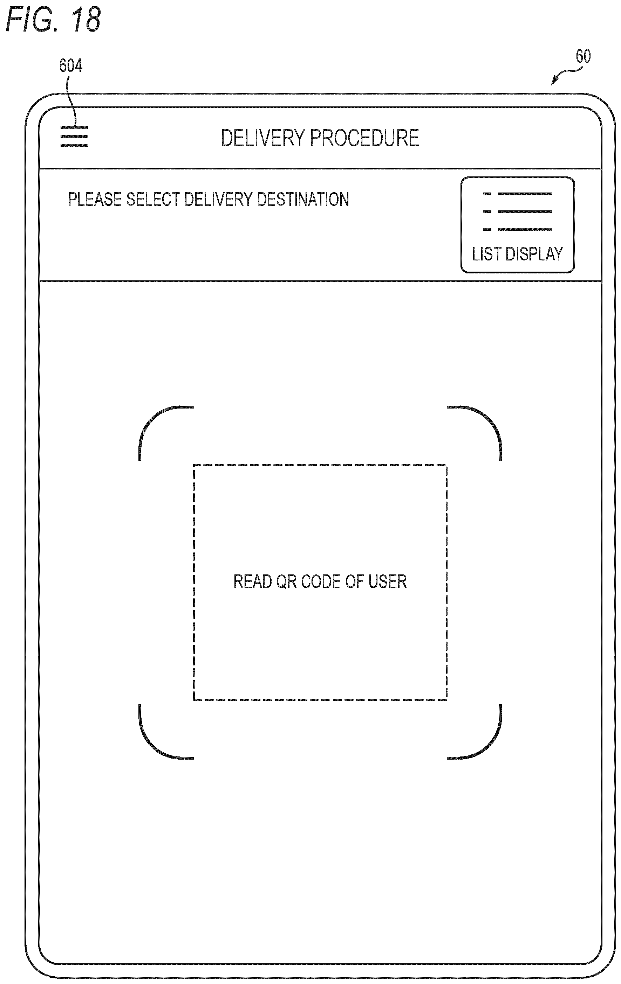

After the completion of the operation confirmation in step S180, the staff member of the sales store X selects the "delivery procedure" button displayed in the lower part of the vehicle detail screen in FIGS. 15 to 17. When the "delivery procedure" button is selected, as illustrated in FIG. 18, the QR code reader is activated. The staff member of the sales store X reads the QR code including the user information displayed on the portable terminal 8 (the user application) of the user as a delivery destination candidate with the store tablet 60, and acquires the user information including the user ID. The control unit 610 of the store tablet 60 associates the user information with the vehicle information of the electric bicycle 10. The method of acquiring the user information is not limited to the method using the QR code. For example, on an upper part of the screen in FIG. 18, a "list display" button for displaying a list of users (for example, customers with past transaction) already registered in the store application of the sales store X is displayed. The staff member of the sales store X may select the "list display" button and select a user as a delivery destination from the user list displayed on the screen to acquire the user information of the delivery destination.

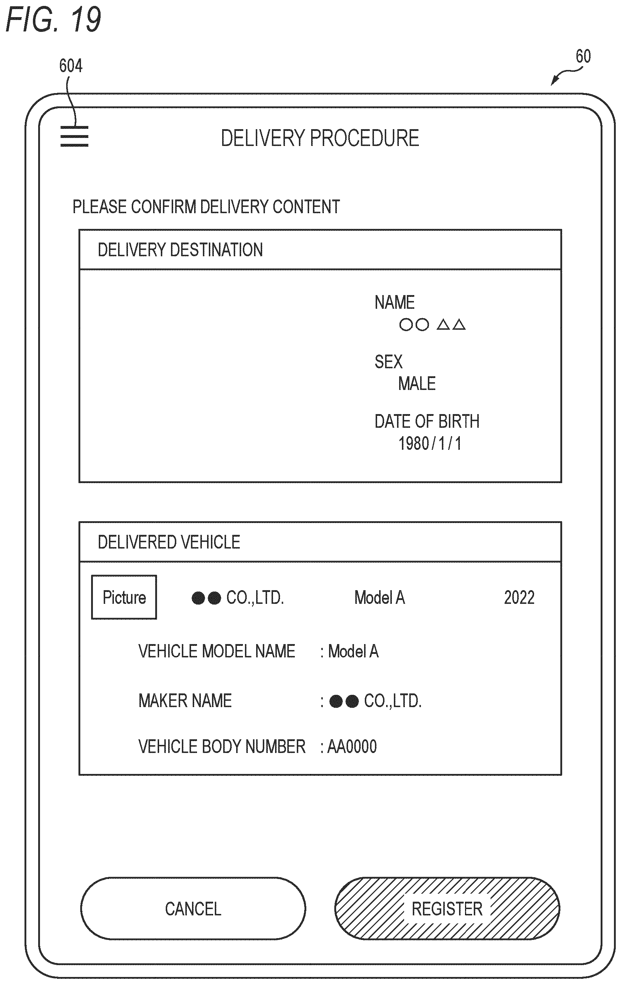

When the user information is acquired, a screen for confirming a delivery content is displayed before delivery registration as illustrated in FIG. 19. The user information of the user as the delivery destination of the electric bicycle 10 is displayed on an upper side of the confirmation screen, and the vehicle information of the electric bicycle 10 as a delivered vehicle is displayed on a lower side of the screen. In this way, the user information (that is, information on the delivery destination candidate) and the vehicle information of the electric bicycle 10, which have been associated with each other, are simultaneously displayed on the display of the store tablet 60, and thus the staff member of the sales store X can easily visually confirm the information, and it is possible to prevent the occurrence of a mistake in delivering the electric bicycle 10 to an erroneous user.

A "register" button is displayed at the bottom of the screen in FIG. 19. The "register" button is information for the control unit 610 of the store tablet 60 to confirm that the user information of the delivery destination and the vehicle information of the delivered vehicle are confirmed by the staff member of the sales store X, or information for confirming that the staff member of the sales store X has understood that the association between the user information of the delivery destination and the vehicle information of the delivered vehicle is determined. The staff member of the sales store X confirms that the information on the delivered vehicle and the user information of the delivery destination is correct, and selects the "register" button at the bottom of the screen. When the information on the ownership of the electric bicycle 10 is handled, a further attention is required, and thus it is possible to prompt the staff member of the sales store X to perform a cautious confirmation operation by providing the "register" button.

By selecting the "register" button, the association between the user information of the delivery destination and each piece of identification information such as the vehicle ID of the electric bicycle 10 is determined. In this way, the control unit 610 of the store tablet 60 can confirm that the staff member of the sales store X has confirmed the vehicle information of the delivered vehicle and the user information of the delivery destination by the "registration" button before the delivery of the electric bicycle 10, and can reliably prevent the erroneous information from being changed or updated.

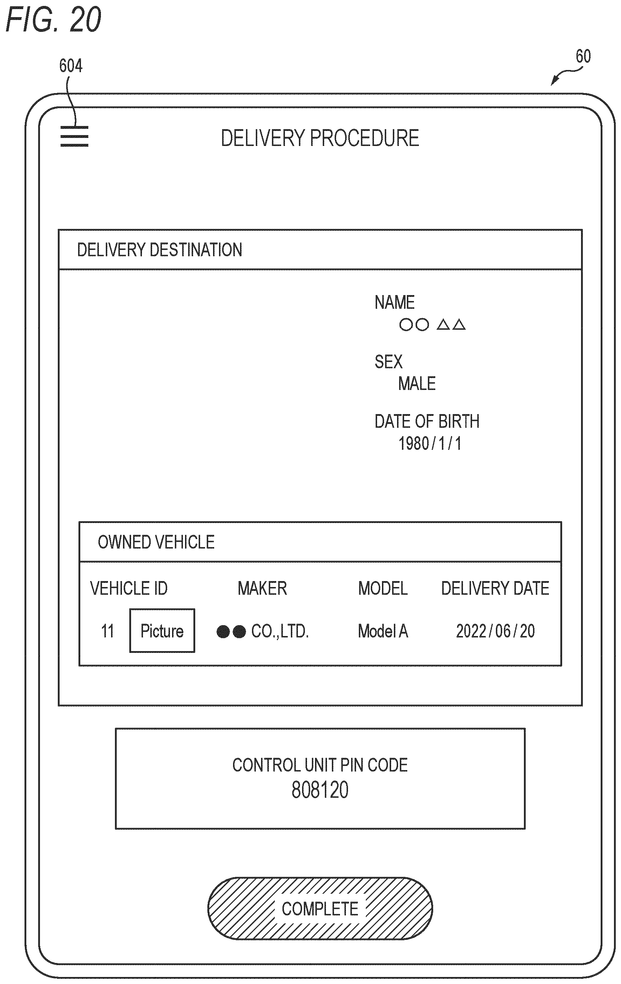

FIG. 20 is a screen displayed after the "register" button of FIG. 19 is selected. When the "register" button is selected, the fact that the owing entity of the electric bicycle 10 is changed from the sales store X to the user is stored in the storage unit 620 of the store tablet 60, and the owing entity is updated. Furthermore, the store tablet 60 transmits a change content of the owing entity to the server 90, and the storage unit 920 of the server 90 stores the change content and updates the owing entity. More specifically, in the store tablet 60 and the server 90, of the vehicle ID and store ID of the electric bicycle 10 that have been associated with each other, the store ID is changed to the user ID, so that the association between the vehicle ID and the store ID is canceled, and the fact that the vehicle ID and the user ID are newly associated is stored in the storage unit 620 of the store tablet 60 and the storage unit 920 of the server 90. The portion in which the owing entity in the vehicle information stored in the server 90 is changed from the sales store X to the user may be an aspect in which the ownership of the electric bicycle 10 stored in the server 90 is transferred from the sales store X to the user.

When the owing entity is updated, a new PIN code of the control circuit 40 is transmitted from the store tablet 60 (the store application) to the control circuit 40 and the server 90, and the control circuit 40 and the server 90 update PIN code information of the control circuit 40. As illustrated in FIG. 20, a new PIN code is displayed on the store tablet 60. Since the PIN code is updated when the owing entity of the electric bicycle 10 is changed, it is possible to prevent a terminal of the previous owner from unnecessarily communicating with the control circuit 40, for example, when there is a previous owner of the electric bicycle 10 (a person who owns the electric bicycle 10 before the electric bicycle 10 is owned by sales store X; see the "previous owner" in FIG. 15).

Even if the communication between the server 90 and the store tablet 60 becomes unstable and the server 90 is unable to update the PIN code information in the delivery procedure, the staff member of the sales store X can perform the communication between the store tablet 60 and the control circuit 40 by confirming the new PIN code displayed on the store tablet 60.

As described above, the store tablet 60 (the store application) can associate the vehicle ID with the store ID or associate the vehicle ID with the user ID, thereby changing the owing entity of the electric bicycle 10 and appropriately managing the electric bicycle 10 together with the owing entity.

Since the vehicle ID is the identification information directly or indirectly related to other components (specifically, the vehicle body frame 67, the power unit 20, the control circuit 40, and the battery 2) of the electric bicycle 10, the vehicle ID is preferably the identification information associated with the user ID or the store ID rather than other identification information (specifically, the vehicle body number, the power unit number, the communication address information of the control circuit 40, and the battery number).

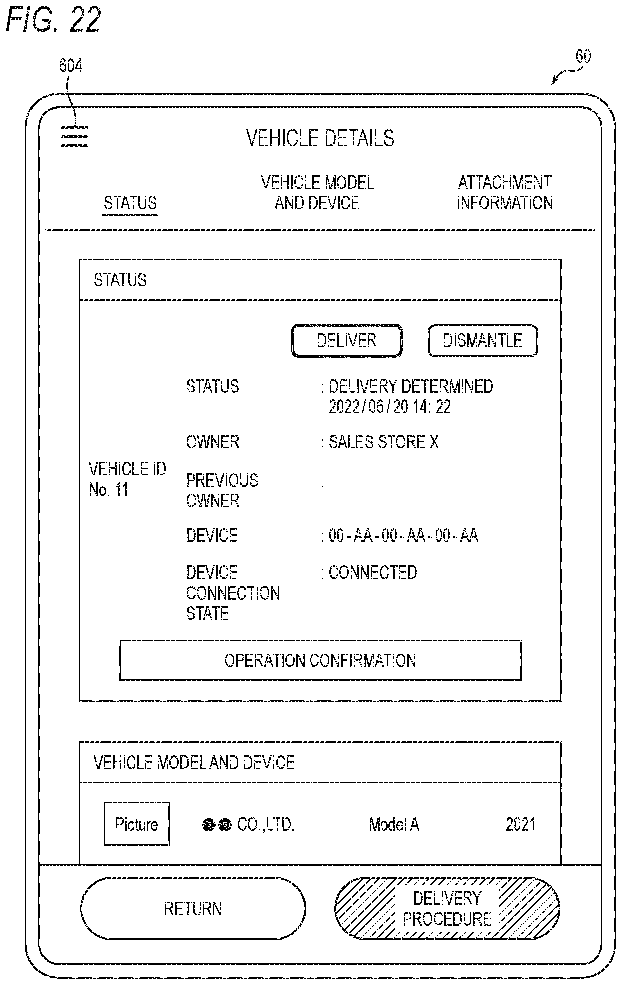

In the above description, on the screen in FIG. 17 after the operation confirmation of the electric bicycle 10 is completed, the "delivery procedure" button is selected to perform the delivery procedure, but the method of proceeding to the delivery procedure is not limited thereto. When the time from the completion of the operation confirmation to the delivery procedure to the user becomes available, for example, the screen of the store application may be moved from the screen in FIG. 17 in order to perform work on another vehicle. In such a case, when performing the delivery procedure to the user, the staff member of the sales store X first selects an "owned vehicle" button from the store menu illustrated in FIG. 25, and displays a screen illustrated in FIG. 21 in which the vehicles owned by the sales store X are listed. The staff member then selects the electric bicycle 10 to be delivered to the user from the owned vehicle list. After the electric bicycle 10 is selected, a BT connection is established between the store tablet 60 and the control circuit 40 of the electric bicycle 10. After the BT connection, a screen (same as the "vehicle details" screen in FIGS. 15 to 18) as illustrated in FIG. 22 is displayed, and the vehicle information of the electric bicycle 10 is displayed. By selecting the "delivery procedure" button or the "deliver" button on the screen in FIG. 22, the QR code reader of FIG. 18 is activated. After the QR code reader is activated, the store tablet 60 performs the delivery procedure of the electric bicycle 10 in the same manner as described above.

Here, the owned vehicle list screen in FIG. 21 will be described in detail. As described above, when the vehicle ID of the electric bicycle 10 is associated with the store ID of the sales store X in step S140, the electric bicycle 10 is registered as a vehicle owned by the sales store X. In a case where there are a plurality of vehicles owned by the sales store X, in other words, there are a plurality of vehicle IDs associated with the store ID of the sales store X, a plurality of owned vehicles are displayed on the display of the store tablet 60 together with the vehicle IDs as illustrated on the owned vehicle list screen in FIG. 21.

On the owned vehicle list screen, the vehicle IDs of the owned vehicles and vehicle information associated with the vehicle IDs (for example, communication address information of the control circuit) are displayed, and in addition, a status of each of the owned vehicles is also displayed. The status of the owned vehicle indicates the status of the owned vehicle before delivery from attachment of the assist device, and is divided into four statuses A, B, C, and D. The status A means a status in which the steps up to step S140 in FIG. 8 are completed, that is, a status in which the vehicle ID is given. The status B means a status in which the steps up to step S160 are completed, that is, a status in which the attachment of the assist device to the electric bicycle 10 is completed. The status C means a status in which the steps up to step S170 are completed, that is, a status in which the attachment check is completed. The status D means a status in which the steps up to step S180 are completed, that is, a status in which the operation confirmation of the electric bicycle 10 is completed and the delivery is possible. On the other hand, the statuses A to C can also be said to indicate that the electric bicycle 10 cannot be delivered.

In the owned vehicle list screen in FIG. 21, the status is displayed in association with each vehicle ID. Specifically, in a status column of each vehicle, the characters A to D are displayed, and for example, the status of a vehicle whose vehicle ID is No. 10 is the status B, in which a status character corresponding to the vehicle is emphasized (for example, colored or made larger). In an example of the screen in FIG. 21, when the status of the vehicle is the status D, the status column is displayed as "delivery possible". Since the status is displayed for each vehicle on the owned vehicle list screen, it is possible to easily confirm the status of the owned vehicles of the sales store X, and for example, it is possible to easily confirm which vehicle can be delivered. Therefore, the sales store X can easily manage the owned vehicles owned by the store.

In addition to the status of the owned vehicles, the store tablet 60 may also display the status of the vehicle body frame 67, the power unit 20, the control circuit 40, the battery 2, and/or the owing entity of each vehicle on the display. For example, a connection state between the control circuit 40 and the store tablet 60 and the remaining capacity of the battery 2 may be displayed on the display.

A "search" button is displayed on the owned vehicle list screen in FIG. 21. When the staff member of the sales store X selects the "search" button, the staff member can set, for example, conditions based on the status of the vehicle, a registration date registered as the owned vehicle, the vehicle model information, and the like, and extract vehicles matching the conditions from the plurality of owned vehicles. Accordingly, when there are many owned vehicles, the staff member can easily extract a target vehicle.

(Pick-Up Process)

The management method of the electric bicycle 10 described above includes step S190 of performing the delivery procedure of the electric bicycle 10 from the sales store X to the user. In addition to this, the management method may further include a step of performing a procedure of picking up the electric bicycle 10 from the user. In other words, a pick-up procedure is a procedure for delivering the electric bicycle 10 from the user to the sales store X, and is a procedure for changing the ownership of the electric bicycle 10 in which the owing entity of the electric bicycle 10 is changed from the user to the sales store X.

When the user visits the sales store X, the staff member of the sales store X first operates the store tablet 60 to select "user search" from the store menu illustrated in FIG. 25. When the "user search" is selected, the QR code reader is activated. The staff member reads the QR code including the user information displayed on the portable terminal 8 (the user application) of the user who is the owing entity of the electric bicycle 10 with the store tablet 60, and acquires the user information including the user ID. The method of acquiring the user information is not limited to the method using the QR code. For example, when the "list display" button for displaying a list of users (customers) already registered in the store application is displayed as in the screen in FIG. 18, the staff member may select the "list display" button and select the user who is the owing entity of the electric bicycle 10 from the displayed user list to acquire the user information.

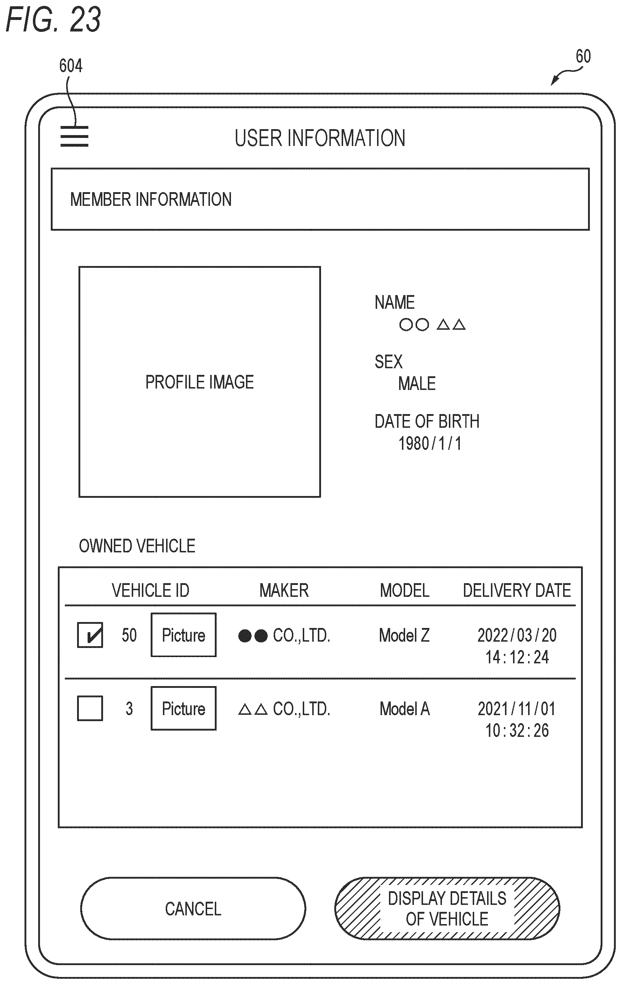

When the user information is acquired, a user information screen is displayed on the store tablet 60 as illustrated in FIG. 23. A vehicle to which a vehicle ID is given is displayed on the user information screen. When the user owns a plurality of vehicles to which the vehicle IDs are given, the plurality of vehicles are displayed. The staff member of the sales store X selects a vehicle to be picked up from the owned vehicles of the user, and selects a "display vehicle details" button displayed at the bottom of the screen.

When the "display vehicle details" button is selected, the store tablet 60 and the control circuit 40 of the electric bicycle 10 communicate with each other by the BT connection. At this time, the store tablet 60 transmits the vehicle ID of the electric bicycle 10 to the server 90, and upon receiving the vehicle ID, the server 90 transmits the PIN code of the control circuit 40 of the electric bicycle 10 stored in the server 90 to the store tablet 60. After the PIN code is input to the store tablet 60, the connection between the store tablet 60 and the control circuit 40 is completed.

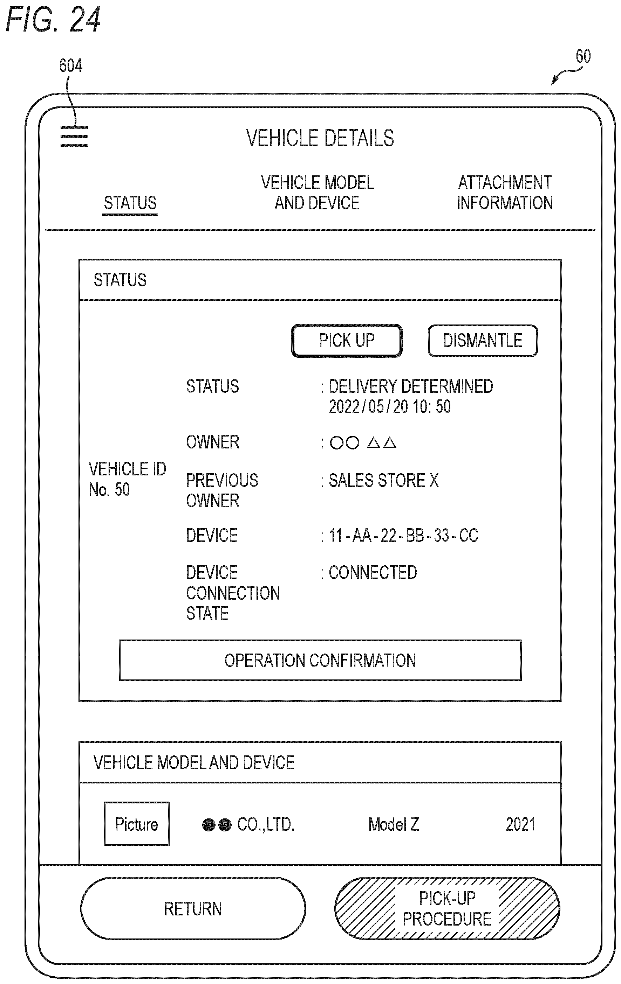

After the "display vehicle details" button is selected, the vehicle detail screen is displayed on the store tablet 60 as illustrated in FIG. 24. When the connection between the store tablet 60 and the control circuit 40 is completed, a "pick-up procedure" button and a "pick up" button can be selected on the screen in FIG. 24. By selecting the "pick-up procedure" button or the "pick up" button, the fact that the owing entity of the electric bicycle 10 is changed from the user to the sales store X is stored in the store tablet 60 (the store application), and the owing entity of the electric bicycle 10 is updated. Furthermore, the store tablet 60 transmits the change content of the owing entity to the server 90, and the server 90 stores the change content and updates the owing entity of the electric bicycle 10. When the server 90 stores the change in the owing entity, the pick-up procedure of the electric bicycle 10 is completed. After the completion of the pick-up procedure of the electric bicycle 10, an owned vehicle list (see FIG. 22) of the sales store X on the store application is updated, and an owned vehicle list of the user (see FIG. 23) is also updated.

The change in the owing entity from the user to the sales store X in the pick-up procedure may be temporary. For example, when an abnormality occurs in the electric bicycle 10 owned by the user and requests the sales store X to repair the electric bicycle 10, the sales store X may temporarily change the owing entity of the electric bicycle 10 from the user to the sales store X according to the aforementioned method. When the owing entity of the electric bicycle 10 is changed to the sales store X, the staff member of the sales store X can select an "operation confirmation" button displayed at the center of the screen on the screen in FIG. 24. The staff member can perform the operation confirmation of the electric bicycle 10 based on operation confirmation items displayed on the store tablet 60, and can confirm and repair the abnormality of the electric bicycle 10. After the repair or the like of the electric bicycle 10 is completed, the owing entity of the electric bicycle 10 is again changed from the sales store X to the user.

The vehicle management method described in the above embodiment can be realized by, for example, executing a management program prepared in advance by a computer (a processor). The management program is stored in a computer-readable storage medium, and is executed by being read from the storage medium. In addition, the management program may be provided in a form stored in a non-transitory storage medium such as a flash memory, or may be provided via a network such as the Internet.

Although the embodiment has been described above with reference to the drawings, it is needless to say that the present invention is not limited to such an example. It is apparent that those skilled in the art can conceive of various modifications and alterations within the scope described in the claims, and it is understood that such modifications and alterations naturally fall within the technical scope of the present invention. In addition, respective constituent elements in the above embodiment may be freely combined without departing from the gist of the invention.

In the above embodiment, the electric bicycle 10 is exemplified as the vehicle, but the present invention is not limited thereto, and may be a three-wheeled vehicle or a four-wheeled vehicle other than a two-wheeled vehicle.

In the above embodiment, the control circuit 40 has been described as having a configuration that mainly controls the motor M, but is not limited thereto. For example, the control circuit 40 may be configured to control various components (for example, the battery 2, the GNSS unit 43, and the BLE unit 44) mounted on the electric bicycle 10, that is, the control circuit 40 may control at least one of the electric bicycle 10 and the motor M.

In the above embodiment, the store tablet 60 (the store application) acquires the store ID, the communication address information, the vehicle model information, the vehicle body number, the vehicle ID, the power unit number, the battery number, and the user ID and associates the information with each other, but the present invention is not limited thereto. The store tablet 60 (the store application) may acquire any two of the store ID, the communication address information, the vehicle model information, the vehicle body number, the vehicle ID, the power unit number, the battery number, and the user ID (for example, the store ID of the sales store X and the communication address information of the control circuit 40) as first identification information and second identification information, and associate the first identification information with the second identification information. By associating at least two information with each other, management becomes easier than when two information are separately managed. The store tablet 60 may associate the store ID, the communication address information, the vehicle model information, the vehicle body number, the vehicle ID, the power unit number, the battery number, and the user ID with the store tablet information which is the identification information of the store tablet 60.

In the above embodiment, the sales store X or the user is the owing entity of the electric bicycle 10, but the present invention is not limited thereto. For example, the sales store X or the user does not necessarily have to own the electric bicycle 10, and may be a management entity that manages the electric bicycle 10 or a use entity that uses the electric bicycle 10.

In the above embodiment, the owing entity of the electric bicycle 10 is changed between the sales store X and the user, but the present invention is not limited thereto, and the owing entity of the electric bicycle 10 may be changed between the sales stores. For example, when the owing entity of the electric bicycle 10 of the sales store X is changed to a sales store Y, the sales store Y first displays a store QR code displayed on the store menu (see FIG. 25) of the store application in which a store ID of the sales store Y is registered. The sales store X may read the QR code of the sales store Y with the QR code reader of the store tablet 60, and may perform the delivery procedure of the electric bicycle 10 from the sales store X to the sales store Y in the above-described manner.

In the above embodiment, the example in which the store tablet 60 serving as the information processing device performs the vehicle management method has been described, but the present invention is not limited thereto. For example, the server 90 may perform the management method as the information processing device. In this case, the control unit 910 of the server 90 functions as the acquisition unit 611 and the processing unit 612 of the store tablet 60. In addition, the store tablet 60 and the server 90 may cooperate to perform the management method as information processing devices. In this case, for example, the acquisition unit 611 may be included in the store tablet 60, and the processing unit 612 may be included in the server 90.

Further, in the above embodiment, various kinds of identification information are displayed on the display of the store tablet 60, but the present invention is not limited thereto, and various kinds of identification information may be displayed on the portable terminal 8 of the user. For example, the portable terminal 8 may be configured to access the server 90 using the user application and display the associated identification information on the display of the portable terminal 8.

In the present specification, at least the following matters are described. Although corresponding constituent elements or the like in the above embodiment are shown in parentheses, the present invention is not limited thereto.

(1) A vehicle management method for managing a vehicle (electric bicycle 10) having a vehicle body (vehicle body frame 67) and a power source (motor M) mounted on the vehicle body, the vehicle management method including:

> a step of acquiring, as first identification information and second identification information, any two of

>> vehicle body identification information (vehicle body number) which is identification information for identifying the vehicle body,
>> power source identification information (power unit number) which is identification information for identifying the power source,
>> control device identification information (communication address information) which is identification information for identifying a control device (control circuit 40) configured to control at least one of the vehicle and the power source,
>> energy storage device identification information (battery number) which is identification information for identifying an energy storage device (battery 2) configured to store energy to be supplied to the power source,
>> vehicle identification information (vehicle ID) which is identification information for identifying the vehicle, and
>> owing entities identification information (store ID or user ID) which is identification information for identifying an entity of owing or others (sales store X or user) that is any one of an entity of owing the vehicle, an entity of managing the vehicle, or an entity of using the vehicle; and

> a step of associating the first identification information which is acquired and the second identification information which is acquired.

According to (1), since the first identification information and the second identification information are associated with each other, it is possible to appropriately manage vehicle information, information on components constituting the vehicle, information on the entity of owning the vehicle or others.

(2) The vehicle management method according to (1), further including:
a step of storing the first identification information and the second identification information which ssare associated with each other.

According to (2), the first identification information and the second identification information can be stored in association with each other. The storing step is performed by at least one of the storage unit 920 of the server 90, the storage unit 620 of the store tablet 60, and the memory 42 of the control circuit 40 in the above embodiment, for example.

(3) The vehicle management method according to (1) or (2), in which

the first identification information is the owing entities identification information (store ID), and the second identification information is the control device identification information (communication address information), and
the control device is provided to be capable of communicating with a terminal device (store tablet 60) used by the entity of owning or others.

According to (3), the terminal device used by the entity of owning or others can communicate with the control device to associate the owing entities identification information with the control device identification information.

(4) The vehicle management method according to (3), further including:
a step of associating the owing entities identification information with the terminal device or terminal device identification information (store tablet information) which is identification information for identifying the terminal device.

According to (4), the entity of owning or others can manage various kinds of information on the vehicle by operating the terminal device associated with the owing entities identification information.

(5) The vehicle management method according to (4), further including:
a connection establishment step which is a step of establishing a connection between the terminal device and the control device.

According to (5), the terminal device used by the entity of owning or others can communicate with and connect to the control device.

(6) The vehicle management method according to (5), in which

the connection establishment step includes
a step of selecting, by the terminal device, the control device identification information of the control device to be connected.

According to (6), the terminal device can select the control device and appropriately manage the control device.

(7) The vehicle management method according to any one of (1) to (6), in which

the first identification information is the owing entities identification information, and the second identification information is any one of the vehicle body identification information, the power source identification information, the control device identification information, the energy storage device identification information, and the vehicle identification information, and
the vehicle management method further includes:
a step of changing the owing entities identification information as the first identification information to another owing entities identification information which is identification information for identifying another entity of owning or others different from the entity of owning or others.

According to (7), it is possible to appropriately manage the change of the owing entities identification information of the vehicle.

(8) The vehicle management method according to (7), in which

the control device is provided to be capable of communicating with a terminal device (store tablet 60) used by the entity of owning or others, and
the vehicle management method further includes:

in the step of changing,
when the owing entities identification information as the first identification information is changed to the another owing entities identification information,
an update step of updating a password code (PIN code) for communication between the terminal device and the control device, or an authorized user identification code.

According to (8), when the entity of owning or others is changed (that is, when the ownership is transferred), the password code or the authorized user identification code is updated, and thus it is possible to prevent an old entity of owning or others from unnecessarily communicating with the control device. Here, the password code can be used by, for example, a plurality of persons authorized to right, and the authorized user identification code can be used by, for example, a specific individual.

(9) The vehicle management method according to (7) or (8), in which
the second identification information is the vehicle identification information.

According to (9), since the vehicle identification information is identification information directly or indirectly related to the identification information of the components of the vehicle (the vehicle body, the power source, the control device, and the energy storage device), the vehicle identification information is preferably identification information associated with the owing entities identification information rather than the identification information of the components of the vehicle.

(10) The vehicle management method according to any one of (1) to (9), further including:
a generation step of generating display information ("delivery procedure" screen (FIG. 19), an "attachment vehicle information" screen (FIG. 12), "attachment information input" screen (FIG. 14), and "vehicle details" screen (FIG. 15)) for displaying the first identification information and the second identification information, which are associated with each other, on a display unit (display of store tablet 60) of a terminal device (store tablet 60) used by the entity of owning or others.

According to (10), by displaying the two identification information on the display unit and prompting the entity of owning or others to confirm the identification information, it is possible to prevent a mistake in associating the two identification information.

(11) The vehicle management method according to (10), in which
the display information is information of a mode in which the first identification information and the second identification information are simultaneously displayed on the display unit.

According to (11), by visually displaying the two identification information on the display unit at the same time, it is possible to further prevent a mistake in associating the two identification information.

(12) The vehicle management method according to (10) or (11), in which

the first identification information is the owing entities identification information, and the second identification information is any one of the vehicle body identification information, the power source identification information, the control device identification information, the energy storage device identification information, and the vehicle identification information, and
the display information includes
fulfillment confirmation information ("register" button on "delivery procedure" screen (FIG. 19)) which is information for confirming that the owing entities identification information and the second identification information are confirmed by the entity of owning or others or information for confirming that the entity of owning or others acknowledges that the first identification information and the second identification information, which are associated with each other, are determined.

When the first identification information is the owing entities identification information, new settings and subsequent changes or updates to information related to "transfer of ownership" are made, and thus, when the owing entities identification information is handled, a further attention is required. According to (12), it is possible to prompt the entity of owning or others to perform a cautious confirmation operation according to the fulfillment confirmation information. In addition, before the first identification information and the second identification information associated with each other are determined, it is possible to reliably prevent changes or updates to erroneous information by confirming that the association is confirmed or understood by the entity of owning or others.

(13) The vehicle management method according to any one of (10) to (12), in which the display information includes
cancel confirmation information ("dismantle" button on "vehicle details" screen (FIG. 15)) which is information for inputting a request or an instruction by the entity of owning or others that cancels an association between the first identification information and the second identification information which are associated with each other.

According to (13), it is possible to cancel the association between the first identification information and the second identification information according to a request or an instruction from the entity of owning or others.

(14) The vehicle management method according to (13), further including:

a step of acquiring an input to the cancel confirmation information displayed on the display unit; and
when an input to the cancel confirmation information is acquired, deleting identification information, or changing identification information to another identification information, as to at least any one of the first identification information and the second identification information.

According to (14), even when, for example, removal or replacement of components constituting the vehicle is performed, the vehicle can be appropriately managed by appropriately deleting or changing the identification information.

(15) The vehicle management method according to any one of (1) to (14), further including:

in a case where there are a plurality of any one of the vehicle body identification information, the power source identification information, the control device identification information, the energy storage device identification information, the vehicle identification information, and the owing entities identification information,

another generation step of generating another display information ("owned vehicle list" screen (FIG. 21), "attachment device" screen (FIG. 10), and "attachment vehicle model" screen (FIG. 11)) for displaying a plurality of identification information being in plurality, on a display unit (display) of a terminal device (store tablet 60) used by the entity of owning or others.

According to (15), the entity of owning or others can visually understand the plurality of identification information being in plurality on a list.

(16) The vehicle management method according to (15), in which
the another display information includes information ("status" of vehicle) indicating a state of at least one of the vehicle body, the power source, the control device, the energy storage device, the vehicle, and the entity of owning or others.

According to (16), the states of the vehicle body, the power source, the control device, the energy storage device, the vehicle, and the entity of owning or others can also be confirmed on the display unit in which a plurality of identification information are displayed in a list.

(17) The vehicle management method according to (15) or (16), in which
the another display information includes information indicating that it is possible (the "status" of the vehicle is "delivery possible") or impossible to change the owing entities identification information.

According to (17), the entity of owning or others can easily understand whether the change in the owing entities identification information is possible on the display unit in which a plurality of identification information are displayed in a list.

(18) A vehicle management program for managing a vehicle (electric bicycle 10) having a vehicle body (vehicle body frame 67) and a power source (motor M) mounted on the vehicle body, the vehicle management program causing a computer to execute:

a stepf of acquiring, as first identification information and second identification information, any two of

vehicle body identification information (vehicle body number) which is identification information for identifying the vehicle body,
power source identification information (power unit number) which is identification information for identifying the power source,
control device identification information (communication address information) which is identification information for identifying a control device (control circuit 40) configured to control at least one of the vehicle and the power source,
energy storage device identification information (battery number) which is identification information for identifying an energy storage device (battery 2) configured to store energy to be supplied to the power source,
vehicle identification information (vehicle ID) which is identification information for identifying the vehicle, and
owing entities identification information (store ID or user ID) which is identification information for identifying an entity of owning or others (sales store X or user) that is any one of an entity of owning the vehicle, an entity of managing the vehicle, or an entity of using the vehicle; and

a step of associating the first identification information which is acquired and the second identification information which is acquired.

According to (18), since the first identification information and the second identification information are associated with each other, it is possible to appropriately manage vehicle information, information on components constituting the vehicle, information on the entity of owning the vehicle or others.

(19) A computer-readable storage medium storing the management program according to (18).

According to (19), the management program according to (18) can be executed by a computer.

(20) An information processing device (store tablet 60 and/or server 90) that manages a vehicle (electric bicycle 10) having a vehicle body (vehicle body frame 67) and a power source (motor M) mounted on the vehicle body, the information processing device including:

an acquisition unit (acquisition unit 611 and/or control unit 910) configured to acquire, as first identification information and second identification information, any two of

vehicle body identification information (vehicle body number) which is identification information for identifying the vehicle body,

power source identification information (power unit number) which is identification information for identifying the power source,

control device identification information (communication address information) which is identification information for identifying a control device (control circuit 40) configured to control at least one of the vehicle and the power source,

energy storage device identification information (battery number) which is identification information for identifying an energy storage device (battery 2) configured to store energy to be supplied to the power source,

vehicle identification information (vehicle ID) which is identification information for identifying the vehicle, and

owing entities identification information (store ID or user ID) which is identification information for identifying an entity of owning or others (sales store X or user) that is any one of an entity of owing the vehicle, an entity of managing the vehicle, or an entity of using the vehicle; and

a processing unit (processing unit 612 and/or control unit 910) configured to associate the first identification information and the second identification information which are acquired by the acquisition unit with each other.

According to (20), since the first identification information and the second identification information are associated with each other, it is possible to appropriately manage vehicle information, information on components constituting the vehicle, information on the entity of owning the vehicle or others.

The present application is based on Japan Patent Application (Patent Application No. 2022-146575) filed on September 14, 2022, and the contents thereof are incorporated herein by reference.

REFERENCE SIGNS LIST

2: battery (energy storage device)
10: electric bicycle (vehicle)
40: control circuit (control device)
60: store tablet (terminal device, information processing device)
611: acquisition unit
612: processing unit
67: vehicle body frame (vehicle body)
90: server (information processing device)
M: motor (power source)

**Claims**

1. A vehicle management method for managing a vehicle having a vehicle body and a power source mounted on the vehicle body, the vehicle management method comprising:

   a step of acquiring, as first identification information and second identification information, any two of

      vehicle body identification information which is identification information for identifying the vehicle body,
      power source identification information which is identification information for identifying the power source,
      control device identification information which is identification information for identifying a control device configured to control at least one of the vehicle and the power source,
      energy storage device identification information which is identification information for identifying an energy storage device configured to store energy to be supplied to the power source,
      vehicle identification information which is identification information for identifying the vehicle, and
      owing entities identification information which is identification information for identifying an entity of owning or others that is any one of an entity of owing the vehicle , an entity of managing the vehicle, or an entity of using the vehicle; and

   a step of associating the first identification information which is acquired and the second identification information which is acquired.

2. The vehicle management method according to claim **1,** further comprising:

a step of storing the first identification information and the second identification information which are associated with each other.

3. The vehicle management method according to claim 1 or 2, wherein

the first identification information is the owing entities identification information, and the second identification information is the control device identification information, and
the control device is provided to be capable of communicating with a terminal device used by the entity of owning or others.

4. The vehicle management method according to claim 3, further comprising:
a step of associating the owing entities identification information with the terminal device or terminal device identification information which is identification information for identifying the terminal device.

5. The vehicle management method according to claim 4, further comprising:
a connection establishment step which is a step of establishing a connection between the terminal device and the control device.

6. The vehicle management method according to claim 5, wherein

the connection establishment step includes
a step of selecting, by the terminal device, the control device identification information of the control device to be connected.

7. The vehicle management method according to any one of claims 1 to 6, wherein

the first identification information is the owing entities identification information, and the second identification information is any one of the vehicle body identification information, the power source identification information, the control device identification information, the energy storage device identification information, and the vehicle identification information, and
the vehicle management method further comprises:
a step of changing the owing entities identification information as the first identification information to another owing entities identification information which is identification information for identifying another entity of owning or others different from the entity of owning or others.

8. The vehicle management method according to claim 7, wherein

the control device is provided to be capable of communicating with a terminal device used by the entity of owning or others, and
the vehicle management method further comprises:

in the step of changing,
when the owing entities identification information as the first identification information is changed to the another owing entities identification information,
an update step of updating a password code for communication between the terminal device and the control device, or an authorized user identification code.

9. The vehicle management method according to claim 7 or 8, wherein
the second identification information is the vehicle identification information.

10. The vehicle management method according to any one of claims 1 to 9, further comprising:
a generation step of generating display information for displaying the first identification information and the second identification information, which are associated with each other, on a display unit of a terminal device used by the entity of owning or others.

11. The vehicle management method according to claim 10, wherein
the display information is information of a mode in which the first identification information and the second identification information are simultaneously displayed on the display unit.

12. The vehicle management method according to claim 10 or 11, wherein

the first identification information is the owing entities identification information, and the second identification information is any one of the vehicle body identification information, the power source identification information, the control device identification information, the energy storage device identification information, and the vehicle identification information, and
the display information includes
fulfillment confirmation information which is information for confirming that the first identification information and the second identification information, which are associated with each other, are confirmed by the entity of owning or others, or information for confirming that the entity of owning or others acknowledges that the first identification information and the second identification information, which are associated with each other, are determined.

13. The vehicle management method according to any one of claims 10 to 12, wherein

the display information includes
cancel confirmation information which is information for inputting a request or an instruction by the entity of owning or others that cancels an association between the first identification information and the second identification information which are associated with each other.

14. The vehicle management method according to claim 13, further comprising:

a step of acquiring an input to the cancel confirmation information displayed on the display unit; and
when an input to the cancel confirmation information is acquired, deleting identification information, or changing identification information to another identification information, as to at least any one of the first identification information and the second identification information.

15. The vehicle management method according to any one of claims 1 to 14, further comprising:

in a case where there are a plurality of any one of the vehicle body identification information, the power source identification information, the control device identification information, the energy storage device identification information, the vehicle identification information, and the owing entities identification information,
another generation step of generating another display information for displaying a plurality of identification information being in plurality, on a display unit of a terminal device used by the entity of owning or others.

16. The vehicle management method according to claim 15, wherein
the another display information includes information indicating a state of at least one of the vehicle body, the power source, the control device, the energy storage device, the vehicle, and the entity of owning or others.

17. The vehicle management method according to claim 15 or 16, wherein
the another display information includes information indicating that it is possible or impossible to change the owing entities identification information.

18. A vehicle management program for managing a vehicle having a vehicle body and a power source mounted on the vehicle body, the vehicle management program causing a computer to execute:

a step of acquiring, as first identification information and second identification information, any two of

vehicle body identification information which is identification information for identifying the vehicle body,
power source identification information which is identification information for identifying the power source,
control device identification information which is identification information for identifying a control device configured to control at least one of the vehicle and the power source,
energy storage device identification information which is identification information for identifying an energy storage device configured to store energy to be supplied to the power source,
vehicle identification information which is identification information for identifying the vehicle, and
owing entities identification information which is identification information for identifying an entity of owning or others that is any one of an entity of owing the vehicle, an entity of managing the vehicle, or an entity of using the vehicle; and

a step of associating the first identification information which is acquired and the second identification information which is acquired.

19. A computer-readable storage medium storing the management program according to claim 18.

20. An information processing device that manages a vehicle having a vehicle body and a power source mounted on the vehicle body, the information processing device comprising:

an acquisition unit configured to acquire, as first identification information and second identification information, any two of

vehicle body identification information which is identification information for identifying the vehicle body, power source identification information which is identification information for identifying the power source, control device identification information which is identification information for identifying a control device configured to control at least one of the vehicle and the power source,
energy storage device identification information which is identification information for identifying an energy storage device configured to store energy to be supplied to the power source,
vehicle identification information which is identification information for identifying the vehicle, and
owing entities identification information which is identification information for identifying an entity of owning or others that is any one of an entity of owing the vehicle, an entity of managing the vehicle, or an entity of using the vehicle; and

a processing unit configured to associate the first identification information and the second identification information which are acquired by the acquisition unit with each other.

## FIG. 1

**ASSIST DEVICE RELATION MANUFACTURERS**

| MANUFACTURER F | | OPERATOR S | MANUFACTURERS A AND C | | MANUFACTURER D | MANUFACTURER B |

- MANUFACTURER F — VEHICLE BODY
- OPERATOR S — SERVER
- MANUFACTURERS A AND C — APPLICATION / CONTROL CIRCUIT
- MANUFACTURER D — POWER UNIT
- MANUFACTURER B — BATTERY

PAYMENT

PRODUCT DELIVERY

PRODUCT DATA (VIA APPLICATION)

STORE APPLICATION

PRODUCT DELIVERY

PRODUCT DELIVERY

PRODUCT DELIVERY

**DEALER A**

SALES OF VEHICLE BODY (PAST)

MANUFACTURING AND DEVELOPMENT REQUEST

**PRODUCT PLANNER**

- ■ PLAN PRODUCT, AND INTEGRATE MANUFACTURERS
- ■ APPLY FOR CERTIFICATION OF ASSIST DEVICE

CERTIFICATION APPLICATION (ASSIST DEVICE)

**CERTIFICATION AGENCY**

- ■ DETERMINE STANDARD COMPLIANCE OF APPLIED PRODUCT
- ■ ISSUE STICKER OR THE LIKE AS CERTIFICATION FOR PRODUCT WHICH IS CERTIFIED AND REGISTERED

DEVELOPMENT AND PRODUCTION COST

CERTIFICATION (ASSIST DEVICE)

(CONT.)

EP 4 588 769 A1

(FIG. 1 CONTINUED)

**DEALER B (ATTACHING STORE)**

- EXHIBIT AND SELL ELECTRIFICATION DEVICES SUCH AS CONTROL CIRCUIT, POWER UNIT, AND BATTERY IN STORE.
- COMBINE AND ATTACH APPROPRIATE PRODUCTS

PRODUCT ORDER
PRODUCT PAYMENT
HANDLING APPLICATION

SHARE
CERTIFICATION
INFORMATION

PAYMENT | SALES | TRAVEL DATA (VIA APPLICATION) | USER APPLICATION | VEHICLE BROUGHT IN AND PAYMENT | SALES AND ATTACHMENT WORK

**CONSUMER**

- PURCHASE AND OWN NON-ELECTRIC BICYCLE BODY (PAST)
- REQUEST ELECTRIFICATION AT DEALER B (PRESENT)

LEGALITY CONFIRMATION

LEGALITY CERTIFICATION

**REGULATORY AGENCY**

- REGULATE ILLEGAL VEHICLE BASED ON CERTIFICATION INFORMATION AND STATE OF VEHICLE BODY

EP 4 588 769 A1

EP 4 588 769 A1

## FIG. 2

Y-axis: ASSIST RATIO (0, 0.5, 1, 1.5, 2, 2.5)

X-axis: VEHICLE SPEED (km/h) (0, 5, 10, 15, 20, 25, 30, 35, 40, 45)

FIG. 3

## FIG. 4A

FIG. 4B

FIG. 5

EP 4 588 769 A1

FIG. 6

CURRENT (A)

TORQUE (Nm)

VEHICLE SPEED (km / h)

# FIG. 7

USER

USER APPLICATION

USER APPLICATION

QR CODE IN USER APPLICATION

USER APPLICATION

USER APPLICATION

APPLICATION DOWNLOAD

MEMBER REGISTRATION

DELIVERY COMPLETION

TRAVELING LOG

SALES STORE

STORE APPLICATION

STORE APPLICATION

ACCESS BY WEB BROWSER

LOG IN

ASSEMBLY INFORMATION

CHECK RESULT

DELIVERY PROCEDURE

TRAVEL DATA

BROWSE AND EDIT STORED DATA

(CONT.)

EP 4 588 769 A1

(FIG. 7 CONTINUED)

SERVER

SERVICE INTRODUCTION WEBSITE

APPLICATION STORE

SERVER

USER WEBSITE

MEMBER INFORMATION STORAGE

STORE API

VEHICLE INFORMATION STORAGE

VEHICLE INFORMATION CHANGE

USER API

TRAVELING LOG STORAGE

MANAGEMENT WEBSITE

EP 4 588 769 A1

# FIG. 8

```
              ( START )
                  |
                  v
  LOG INTO STORE APPLICATION      ~ S100
     (ACQUIRE STORE ID)
                  |
                  v
   ACQUIRE COMMUNICATION
    ADDRESS INFORMATION           ~ S110
     OF CONTROL CIRCUIT
                  |
                  v
      ACQUIRE VEHICLE             ~ S120
     MODEL INFORMATION
                  |
                  v
      ACQUIRE VEHICLE             ~ S130
       BODY NUMBER
                  |
                  v
     ACQUIRE VEHICLE ID           ~ S140
                  |
                  v
  ACQUIRE POWER UNIT NUMBER       ~ S150
                  |
                  v
   ACQUIRE BATTERY NUMBER         ~ S160
                  |
                  v
     ATTACHMENT CHECK             ~ S170
                  |
                  v
   OPERATION CONFIRMATION         ~ S180
                  |
                  v
     DELIVER TO USER              ~ S190
                  |
                  v
              (  END  )
```

## FIG. 9

[ ATTACHMENT FLOW ]

| CONTROL CIRCUIT | VEHICLE BODY | POWER UNIT | BATTERY | STORE APPLICATION | SERVER | STORE STAFF |
|---|---|---|---|---|---|---|
| INSTALL CONTROL SOFTWARE IN ADVANCE | RECORD THE FOLLOWING USING QR CODE IN ADVANCE · PRODUCT NUMBER · SOLID NUMBER | RECORD THE FOLLOWING USING QR CODE IN ADVANCE · PRODUCT NUMBER · SOLID NUMBER | RECORD THE FOLLOWING USING QR CODE IN ADVANCE · PRODUCT NUMBER · SOLID NUMBER | | REGISTER COMBINATION OF CERTIFIED VEHICLE BODY AND COMPONENTS/ CONTROL PARAMETERS FOR EACH COMBINATION IN ADVANCE | STAFF ACCOUNT IS ASSIGNED IN ADVANCE. WHEN WORKING, LOG INTO STORE APPLICATION USING ASSIGNED ACCOUNT. |
| ATTACHMENT | | ATTACHMENT | ATTACHMENT | | | ATTACH POWER UNIT/ BATTERY/CONTROL CIRCUIT TO VEHICLE BODY |
| BT CONNECTION | | | | ACQUIRE MAC ADDRESS | | |
| | | | | ACQUIRE VEHICLE MODEL INFORMATION | | |

(CONT.)

EP 4 588 769 A1

(FIG. 9 CONTINUED)

| | QR CODE → | | | READ QR CODE | | |
| | | | | ACQUIRE VEHICLE ID | | |
| | | QR CODE → | QR CODE → | READ QR CODE ← | | |
| | | | | INQUIRY WHETHER COMBINATION IS CERTIFIED | CONFIRM | |
| | | | | | TRANSMIT CONTROL PARAMETERS | |
| ESTABLISH BT CONNECTION WITH DEALER APPLICATION ↔ | | | | ESTABLISH BT CONNECTION WITH CONTROL CIRCUIT AND WRITE CONTROL PARAMETERS | | |
| | | | | | SAVE COMBINATION INFORMATION | |

EP 4 588 769 A1

## FIG. 10

604

60

| ☰ | ATTACHMENT DEVICE |
|---|---|

PLEASE SELECT DEVICE TO BE INSTALLED

MODEL

☑ Control Unit ( 00 - AA - 00 - AA - 00 - AA )

☐ Control Unit ( 11 - BB - 11 - BB - 11 - BB )

TO NEXT

## FIG. 11

604           60

### ≡ ATTACHMENT VEHICLE MODEL

PLEASE SELECT ATTACHMENT VEHICLE MODEL

| | No | | MAKER | MODEL | YEAR |
|---|---|---|---|---|---|
| ☑ | 1 | Picture | ●● CO.,LTD. | Model A | 2022 |
| ☐ | 2 | Picture | ●● CO.,LTD. | Model B | 2022 |
| ☐ | 3 | Picture | ●● CO.,LTD. | Model C | 2021 |
| ☐ | 4 | Picture | ●● CO.,LTD. | Model D | 2021 |
| ☐ | 5 | Picture | ■■ CO.,LTD. | Model A | 2022 |
| ☐ | 6 | Picture | ■■ CO.,LTD. | Model B | 2021 |
| ☐ | 7 | Picture | ■■ CO.,LTD. | Model C | 2020 |
| ☐ | 8 | Picture | ▲▲ CO.,LTD. | Model A | 2022 |

( RETURN )        ( TO NEXT )

## FIG. 12

604

60

### ATTACHMENT VEHICLE INFORMATION

#### ATTACHMENT VEHICLE MODEL

| 1 | Picture | ●● CO.,LTD. | Model A | 2022 |

VEHICLE MODEL NAME : Model A

MAKER NAME : ●● CO.,LTD.

VEHICLE BODY NUMBER : AA0000        601

#### DEVICE

| Picture | Control Unit ( 00 - AA - 00 - AA - 00 - AA ) | CHANGE |

DEVICE : Control Unit ( 00 - AA - 00 - AA - 00 - AA )
PAC NUMBER : 7788
FIRM VERSION : 2.0.0
FW STATE : SOFTWARE UPDATE
CONNECTION STATE : CONNECTED

MEMO

06/20 SCHEDULED TO RECEIVE

RETURN            REGISTER

## FIG. 13

60

ATTACHMENT VEHICLE INFORMATION INPUT COMPLETED

REGISTERED IN OWNED VEHICLE

MEMBER VEHICLE ID NO. 11

DO YOU WANT TO CONTINUE SETTING THIS VEHICLE?

TO VEHICLE DETAIL SCREEN

TO ATTACHMENT
INFORMATION INPUT SCREEN

COMPLETE

# FIG. 14

604

60

## ATTACHMENT INFORMATION INPUT

ATTACHMENT INFORMATION

MOTOR

MOTOR | Serial No | 602

PLEASE INPUT ACCESSORY INFORMATION

603

BATTERY | Serial No |

BATTERY | Serial No | DELETE

ADDITION OF BATTERY

CANCEL     COMPLETE

# FIG. 15

604                                                                                          60

## VEHICLE DETAILS

| STATUS | VEHICLE MODEL AND DEVICE | ATTACHMENT INFORMATION |

### STATUS

[ DELIVER ]    [ DISMANTLE ]

VEHICLE ID
No. 11

STATUS              : DELIVERY DETERMINED
                      2022 / 06 / 20 14: 22

OWNER               : SALES STORE X

PREVIOUS            :
OWNER

DEVICE              : 00 - AA - 00 - AA - 00 - AA

DEVICE              : CONNECTED
CONNECTION
STATE

OPERATION CONFIRMATION

### VEHICLE MODEL AND DEVICE

| Picture | ●● CO.,LTD. | Model A | 2022 |

( RETURN )          ( DELIVERY PROCEDURE )

## FIG. 16

604

60

VEHICLE DETAILS

| STATUS | VEHICLE MODEL AND DEVICE | ATTACHMENT INFORMATION |

ATTACHMENT INFORMATION

MOTOR ⠀⠀⠀⠀⠀⠀ : ●● MOTOR
BATTERY ⠀⠀⠀⠀⠀ : ●● BATTERY
CONTROL UNIT ⠀ : 00-AA-00-AA-00-AA

| Picture (ENTIRE VEHICLE BODY) | Picture (VEHICLE BODY NUMBER) | Picture (PERIPHERY OF CONTROL UNIT) |

| Picture (PERIPHERY OF MOTOR) | Picture (PERIPHERY OF BATTERY) |

ATTACHMENT CHECK

☑ BB LOCK RING IS ATTACHED WITH TIGHTENING TORQUE OF 40 Nm

☐ ROTATION STOPPER BOLT IS ATTACHED WITH TIGHTENING TORQUE OF 40 Nm

⋮

( RETURN ) ( DELIVERY PROCEDURE )

46

## FIG. 17

604

60

**VEHICLE DETAILS**

| STATUS | VEHICLE MODEL AND DEVICE | ATTACHMENT INFORMATION |
|---|---|---|

⋮

☑ GEAR HAS BEEN SHIFTED TO THE MAXIMUM GEAR STAGE

ACCEPTABLE
(ESTIMATED GEAR RATIO: 3.0)
[ 2022 / 06 / 20  14 : 22 : 15 ]

| | | DETERMINATION |
|---|---|---|
| 1. VEHICLE SPEED OF 3 km/h OR HIGHER | 9km/h | |
| 2. REMAINING BATTERY LEVEL OF 10% OR MORE | 60% | OK |
| 3. PEDALING POWER OF 10 W OR MORE | 10W | OK |
| 4. MOTOR POWER OF 10 W OR MORE | 15W | OK |
| 5. PEDALING CADENCE OF 10 rpm OR MORE | 25rpm | OK |
| 6. ERROR CODE GENERATED | NONE | OK |
| 7. GEAR STAGE | THREE STAGES (MAXIMUM GEAR STAGE) | OK |

OPERATION CONFIRMATION

RETURN

DELIVERY PROCEDURE

## FIG. 18

DELIVERY PROCEDURE

PLEASE SELECT DELIVERY DESTINATION

LIST DISPLAY

READ QR CODE OF USER

# FIG. 19

604

60

## DELIVERY PROCEDURE

PLEASE CONFIRM DELIVERY CONTENT

### DELIVERY DESTINATION

NAME
○○ △△

SEX
MALE

DATE OF BIRTH
1980 / 1 / 1

### DELIVERED VEHICLE

| Picture | ●● CO.,LTD. | Model A | 2022 |

VEHICLE MODEL NAME  : Model A

MAKER NAME  : ●● CO.,LTD.

VEHICLE BODY NUMBER  : AA0000

CANCEL          REGISTER

## FIG. 20

604

60

**DELIVERY PROCEDURE**

DELIVERY DESTINATION

NAME
○○ △△

SEX
MALE

DATE OF BIRTH
1980 / 1 / 1

OWNED VEHICLE

| VEHICLE ID | | MAKER | MODEL | DELIVERY DATE |
|---|---|---|---|---|
| 11 | Picture | ●● CO.,LTD. | Model A | 2022 / 06 / 20 |

CONTROL UNIT PIN CODE
808120

COMPLETE

## FIG. 21

604

60

### OWNED VEHICLE LIST

| PLEASE SELECT VEHICLE | STATUS | |
|---|---|---|
| | A ATTACHMENT INFORMATION INPUT 1 | C WORK CHECK |
| SEARCH | B ATTACHMENT INFORMATION INPUT 2 | D OPERATION CONFIRMATION |

| | VEHICLE ID | | MODEL | DEVICE | REGISTRATION DATE | STATUS | MEMO |
|---|---|---|---|---|---|---|---|
| ☐ | 10 | Picture | Model A | 00-BB-00-BB-00-BB | 22/06/18 | A **B** C D | |
| ☑ | 11 | Picture | Model A | 00-AA-00-AA-00-AA | 22/06/20 | DELIVERY POSSIBLE | RECEPTION 06/20 Mr. ○○ |
| ☐ | 12 | Picture | Model A | 00-CC-00-CC-00-CC | 22/06/19 | **A** B C D | |
| ☐ | 13 | Picture | Model A | 11-AA-11-AA-11-AA | 22/06/19 | **A** B C D | |
| ☐ | 14 | Picture | Model B | 22-AA-22-AA-22-AA | 22/06/19 | A **B** C D | |
| ☐ | 15 | Picture | Model C | 33-AA-33-AA-33-AA | 22/06/18 | A B **C** D | |
| ☐ | 16 | Picture | Model A | 00-DD-00-DD-00-DD | 22/06/19 | **A** B C D | |

TO NEXT

## FIG. 22

604

60

### VEHICLE DETAILS

| STATUS | VEHICLE MODEL AND DEVICE | ATTACHMENT INFORMATION |

---

**STATUS**

[ DELIVER ]  [ DISMANTLE ]

VEHICLE ID No. 11

| | |
|---|---|
| STATUS | : DELIVERY DETERMINED 2022 / 06 / 20 14 : 22 |
| OWNER | : SALES STORE X |
| PREVIOUS OWNER | : |
| DEVICE | : 00 - AA - 00 - AA - 00 - AA |
| DEVICE CONNECTION STATE | : CONNECTED |

OPERATION CONFIRMATION

---

**VEHICLE MODEL AND DEVICE**

| Picture | ●● CO.,LTD. | Model A | 2021 |

RETURN    DELIVERY PROCEDURE

# FIG. 23

# FIG. 24

604

60

**VEHICLE DETAILS**

STATUS | VEHICLE MODEL AND DEVICE | ATTACHMENT INFORMATION

---

**STATUS**

PICK UP | DISMANTLE

VEHICLE ID No. 50

| STATUS | : DELIVERY DETERMINED 2022/05/20 10:50 |
| OWNER | : ○○ △△ |
| PREVIOUS OWNER | : SALES STORE X |
| DEVICE | : 11-AA-22-BB-33-CC |
| DEVICE CONNECTION STATE | : CONNECTED |

OPERATION CONFIRMATION

---

**VEHICLE MODEL AND DEVICE**

Picture | ●● CO.,LTD. | Model Z | 2021

RETURN | PICK-UP PROCEDURE

## FIG. 25

60

STORE MENU

| ATTACHMENT VEHICLE | OWNED VEHICLE | USER SEARCH | STORE QR CODE |

| SET | HELP | TERMS OF USE | PRIVATE POLICY |

SOFTWARE INFORMATION

LOG OUT

*FIG. 26*

60

STORE TABLET

CONTROL UNIT ⌐~610

STORE ID

STORE TABLET
INFORMATION

COMMUNICATION
ADDRESS
INFORMATION

VEHICLE MODEL
INFORMATION

VEHICLE BODY
NUMBER

VEHICLE ID

BATTERY
NUMBER

POWER UNIT
NUMBER

ATTACHMENT
CHECK INPUT

OPERATION
CONFIRMATION
INPUT

USER ID /
ANOTHER
STORE ID

ACQUISITION
UNIT

611

620

STORAGE
UNIT

612

PROCESSING
UNIT

90

SERVER

910

CONTROL
UNIT

920

STORAGE
UNIT

## INTERNATIONAL SEARCH REPORT

International application No.

**PCT/JP2023/033349**

### A.    CLASSIFICATION OF SUBJECT MATTER

***B62K 15/00***(2006.01)i; ***B62J 50/22***(2020.01)i; ***B62M 6/40***(2010.01)i
FI:    B62K15/00; B62M6/40; B62J50/22

According to International Patent Classification (IPC) or to both national classification and IPC

### B.    FIELDS SEARCHED

Minimum documentation searched (classification system followed by classification symbols)

B62K15/00; B62J50/22; B62M6/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | JP 2018-534199 A (CONTI TEMIC MICROELECTRONIC GMBH) 22 November 2018 (2018-11-22)<br>    paragraphs [0001], [0004], [0027]-[0035], fig. 1 | 1-2, 18-20 |
| A |  | 3-17 |
| A | JP 2004-350355 A (SONY CORP.) 09 December 2004 (2004-12-09) | 1-20 |
| A | JP 2004-210230 A (TOSHIBA ENGINEERING CO., LTD.) 29 July 2004 (2004-07-29) | 1-20 |
| A | JP 2013-218632 A (LAUREL BANK MACHINES CO., LTD.) 24 October 2013 (2013-10-24) | 1-20 |
| P, X | JP 2022-184602 A (HONDA MOTOR CO., LTD.) 13 December 2022 (2022-12-13)<br>    paragraphs [0001], [0014]-[0018], [0021], [0022], [0032], [0034], [0050]-[0070], [0077]-[0084], [0103], fig. 1, 2, 6, 9, 10, 13-14 | 1-2, 10, 12, 18-20 |

☐ Further documents are listed in the continuation of Box C.        ☑ See patent family annex.

| | |
|---|---|
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **16 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/033349**

| Patent document cited in search report | | | Publication date (day/month/year) | Patent family member(s) | | | Publication date (day/month/year) |
|---|---|---|---|---|---|---|---|
| JP | 2018-534199 | A | 22 November 2018 | US 2018/0297656 A1 paragraphs [0001], [0004], [0033]-[0042], fig. 1 WO 2017/063918 A1 EP 3362338 A1 DE 102015220084 A1 KR 10-2018-0069870 A | | | |
| JP | 2004-350355 | A | 09 December 2004 | (Family: none) | | | |
| JP | 2004-210230 | A | 29 July 2004 | (Family: none) | | | |
| JP | 2013-218632 | A | 24 October 2013 | (Family: none) | | | |
| JP | 2022-184602 | A | 13 December 2022 | WO 2022/255283 A1 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11005583A B
- JP 2001039377 A
- JP 2022146575 A